# EUROPÄISCHE PATENTSCHRIFT

(11) **EP 3 873 959 B1**
(45) Veröffentlichungstag und Bekanntmachung des Hinweises auf die Patenterteilung: **11.09.2024**
(21) Anmeldenummer: 19790213.3
(22) Anmeldetag: 24.10.2019
(51) Int. Cl.: B05D 7/00, C09D 201/00

(54) **MEHRSCHICHT-LACKAUFBAU MIT VERBESSERTER SCHICHTHAFTUNG**
MULTILAYER VARNISH STRUCTURE WITH IMPROVED LAYER ADHESION
STRUCTURE DE PEINTURE MULTICOUCHE À ADHÉRENCE DE LA COUCHE AMÉLIORÉE

(30) Priorität: 30.10.2018 EP 18203254
(43) Veröffentlichungstag der Anmeldung: 08.09.2021
(73) Patentinhaber: Covestro Deutschland AG, 51373 Leverkusen (DE)
(72) Erfinder: GOLLING, Florian, 40237 Düsseldorf (DE); HECKING, Andreas, 40764 Langenfeld (DE); WEIKARD, Jan, 51375 Leverkusen (DE); LAAS, Hans-Josef, 51519 Odenthal (DE); HEBESTREIT, Tanja, 51688 Wipperfürth (DE); RIEHL, Katja, 51373 Leverkusen (DE); LANGENFELD, Frank, 42799 Leichlingen (DE)
(74) Vertreter: Levpat
(86) Internationale Anmeldenummer: PCT/EP2019/078964
(87) Internationale Veröffentlichungsnummer: WO 2020/089018

(56) Entgegenhaltungen:
- JP-A- 2000 225 374
- US-A- 4 499 150

## Beschreibung

Die vorliegende Erfindung betrifft einen Schichtverbund aus einer unteren Basislack- und einer darüber angeordneten Decklackschicht auf einem Substrat. Die Erfindung betrifft weiterhin ein Verfahren zur Herstellung eines erfindungsgemäßen Schichtverbundes sowie ein Karosserieteil mit einem ebensolchen Schichtverbund.

Das Funktionalisieren von Oberflächen durch Aufbringen weiterer Schichten auf Werkstücken ist ein wichtiges und in vielen Industriebereichen genutztes Verfahren. Neben rein ästhetischen Eigenschaften lassen sich durch diesen zusätzlichen Schritt auch wichtige Gebrauchseigenschaften der Werkstücke verändern, sodass mit ein und demselben Grundaufbau einsatzgerechte Anpassungen erreicht werden können. Diese Flexibilität wird umso wichtiger im Bereich der Konsumgüterindustrie, welche zur Diversifizierung des Produktportfolios ein gewisses Maß an Individualisierbarkeit basierend auf Standardbauteilen erwartet. So ist es für hochwertige Güter, wie beispielsweise Automobile üblich, dass das äußere Erscheinungsbild auf Basis einer (frei) wählbaren Lackfarbe individualisiert werden kann. Diese Lackierung erfolgt in der Regel mehrschichtig, da nur eine Schicht als solches nicht die Gesamtheit an geforderten Eigenschaften aufweisen kann. Insofern wird bei mehrschichtigen Automobillackaufbauten zunächst eine Grundierung aufgebracht, die je nach Substrat die Haftung zwischen dem Substrat und der oder den nachfolgenden Schichten verbessern soll. Diese Basislackierung kann ferner dazu dienen, das Substrat vor Korrosion zu schützen, sofern dieses korrosionsanfällig ist. Des Weiteren sorgt die Grundierung für eine Verbesserung der Oberflächenbeschaffenheit, indem evtl. vorhandene Rauheit und Struktur des Untergrunds überdeckt werden. Auf die Grundierung wird, insbesondere bei Metall- und Plastiksubstraten, oftmals ein Füller aufgebracht, dessen Aufgabe die weitere Verbesserung der Oberflächenbeschaffenheit und die Verbesserung der Steinschlaganfälligkeit ist. Auf den Füller werden üblicherweise eine oder mehrere färb- und/oder effektgebende Schichten aufgebracht, die als Basislack bezeichnet werden. Auf den Basislack wird abschließend in der Regel ein hoch vernetzter Decklack aufgetragen, der für die gewünschte glänzende Optik sorgt und den Lackaufbau vor Umwelteinflüssen schützt.

Sollen vorwiegend klare Decklackschichten erhalten werden, so können beispielsweise silanfunktionelle Prepolymere, insbesondere silanfunktionelle Polyurethanprepolymere, zum Aufbau von Decklackschichten verwendet werden. Die Herstellung silangruppentragender Polyurethane kann dabei auf verschiedene Weise erfolgen, beispielsweise durch Reaktion von Polyisocyanaten bzw. isocyanatfunktionellen Prepolymeren mit gegenüber Isocyanatgruppen reaktiven Silanverbindungen, wie z. B. sekundäre Aminoalkylsilanen oder Mercaptoalkylsilanen.

Die Synthese speziell partiell silanisierter hochmolekularer alkoxysilanfunktionalisierter Polyole und niedermolekularer Alkoxysilane ist in der Literatur beschrieben. Eine Möglichkeit besteht darin, hydroxyfunktionelle Verbindungen, wie z. B. Polyether-, Polyurethan- oder Polyesterpolyole, mit Isocyanatoorganosilanen, wie beispielsweise den in der US 3,494,951 oder EP-A 0 649 850 beschriebenen Isocyanatoalkylalkoxysilanen, umzusetzen. Eine weitere Möglichkeit besteht in der Umsetzung von Isocyanatopropyltrimethoxysilan oder Isocyanatopropyltriethoxysilan mit Polyolen wie in der WO 2009/115079 offenbart.

Addukte aus Isocyanatoalkylalkoxysilanen, wie z. B. Isocyanatopropyltrimethoxysilan, und niedermolekularen, bis zu 20 C-Atome enthaltenden, verzweigten Diolen oder Polyolen sind Gegenstand der EP-A 2 641 925. Zusätzlich zu den niedermolekularen verzweigten Diolen oder Polyolen können bei der Herstellung der Addukte bis zu einem Anteil von 40 Gew.-% weitere Diole und/oder Polyole, darunter z.B. auch hydroxylgruppenhaltige Polyester oder Polyacrylate, mitverwendet werden. So beschreibt beispielsweise die WO 2013/189882 Addukte aus Isocyanatotrialkyoxysilanen und mehrwertigen Alkoholen als zusätzliche Vernetzungsmittel in nicht wässrigen Zweikomponenten-Polyurethanlacken (2K-PUR).

Die WO 2014/180623 beschreibt feuchtigkeitsvernetzende Beschichtungsmittel, die mindestens ein Addukt eines Isocyanatosilans an eine hydroxyfunktionelle Verbindung, einen Zinn-haltigen Katalysator sowie ein Aminosilan enthalten. Als geeignete hydroxyfunktionelle Verbindungen zur Herstellung der Addukte werden einwertige oder mehrwertige Alkohole sowie Polyole genannt, darunter in einer langen Aufzählung geeigneter polymerer Polyole auch hydroxyfunktionelle Polyacrylate.

Die WO 2008/034409 beschreibt beispielhaft die teilweise Umsetzung eines handelsüblichen Polyesterpolyols Desmophen 1145 (Covestro Deutschland AG) mit einem Unterschuss an lsocyanatopropyltriethoxysilan. Aufgrund des gewählten Äquivalentverhältnisses werden dabei weniger als 15 % der im Polyol ursprünglich vorhandenen Hydroxylgruppen urethanisiert.

Weiterhin offenbart die WO 2014/037265 die Herstellung silanfunktioneller Bindemittel mit Thiourethanstruktur durch Umsetzung von Polyolen mit monomerarmen Diisocyanat/Mercaptosilan-Addukten.

Der Stand der Technik offenbart vielfach silanfunktionelle Polymere als zusätzliche vernetzende Komponente in Lackaufbauten. Diese Schichten nutzen "übliche" Lackaufbaupolymere und modifizieren deren Eigenschaften über den Zusatz dieser weiteren Komponente. Der Aufbau von Lackschichten im Wesentlichen allein auf Basis silanfunktioneller Polymere ist hingegen deutlich weniger häufig anzutreffen. Dies liegt zum Teil an der Tatsache, dass Deckschichten mit silanfunktionellen Polymeren als Hauptkomponenten auf den unterschiedlichen Basisschichten deutlich komplexere Trocknungseigenschaften zeigen als die üblicherweise verwendeten Lacke. Die Beschichtungseigenschaften variieren deutlich stärker und zudem ist die Trocknungskinetik deutlich schlechter als die der bekannten Lacke. Zudem kann die Haftung silangruppen-enthaltender Prepolymer-Schichten auf Basislacken gehindert sein, sodass nur ein ungenügender Haftverbund erreicht wird, welches sich u.a. in einer schlechteren Witterungsbeständigkeit widerspiegeln kann.

Im Stand der Technik existiert aus diesen Gründen weiterhin Bedarf an geeigneten Kombinationen aus Basis- und silanfunktionellen Decklacken, wobei der Schichtverbund vergleichbare funktionale insbesondere Haft- und Witterungseigenschaften aufweisen soll wie bekannte Lackbeschichtungen. Es ist daher die Aufgabe der vorliegenden Erfindung einen Schichtverbund mit guten mechanischen Eigenschaften, insbesondere einer guten Haftung und einer guten Lösungsmittel- und Witterungsbeständigkeit, bereitzustellen. Ferner ist es die Aufgabe der vorliegenden Erfindung ein Verfahren zur Herstellung dieser funktionalen Schichtverbünde mit silanfunktionellen Decklackschichten bereitzustellen.

Erfindungsgemäß gelöst wird die Aufgabe für den Schichtverbund durch die Merkmale des Anspruchs 1 und für ein erfindungsgemäßes Verfahren durch die Merkmale des Anspruch 8. Vorteilhafte Weiterbildungen sind in den Unteransprüchen angegeben. Erfindungsgemäß bedeuten die Bezugnahmen auf "umfassend", "enthaltend" usw. bevorzugt "im Wesentlichen bestehend aus" und ganz besonders bevorzugt "bestehend aus".

Erfindungsgemäß ist demzufolge ein Schichtverbund aus einer unteren Basislack- und einer darüber angeordneten Decklackschicht auf einem Substrat, dadurch gekennzeichnet, dass der Basislack zu größer oder gleich 50 Gew.-% und kleiner 100 Gew.-% Polymere ausgesucht aus der Gruppe bestehend aus Polyacrylaten, Polyurethanen, Polyetherpolyolen, Polycarbonatpolyolen, Polyesterpolyolen, Melaminharzen, Alkydharzen oder Mischungen daraus; die Decklackschicht zu größer oder gleich 40 Gew.-% und kleiner oder gleich 100 Gew.-% silangruppen-enthaltende Prepolymere und/oder deren Vernetzungsprodukte; und der Basislack zu größer oder gleich 0,5 Gew.-% und kleiner oder gleich 15 Gew.-% silangruppen-enthaltende Prepolymere und/oder deren Vernetzungsprodukte enthält und wobei die silangruppen-enthaltenden Prepolymere und/oder deren Vernetzungsprodukte mindestens eine Thiourethan- und/oder Urethaneinheit im Molekül aufweisen, wobei sich die Gewichts-%-Angaben jeweils auf den getrockneten und gehärteten Basislack, bzw. die getrocknete und gehärtete Decklackschicht beziehen.

Überraschenderweise wurde gefunden, dass für einen Schichtverbund aus einem Basislack und einem Decklack aus silangruppen-enthaltenden Prepolymeren eine außerordentliche Haftfestigkeit beider Schichten und somit verbesserte mechanische Eigenschaften des Schichtverbundes erhältlich sind. Diese verbesserten mechanischen Eigenschaften ergeben sich für eine Reihe unterschiedlicher Basislackschichten und ohne durch die Theorie gebunden zu sein, kann die verbesserte Haftung darin begründet liegen, dass ein Teil der als Decklackschicht aufgebrachten silangruppen-enthaltenden Prepolymere in der Lage ist, in die definierten Basislackschichten zu diffundieren. Es kann sich somit eine verbesserte Haftung zwischen beiden Schichten einstellen, welches mit einer Verbesserung der mechanischen Eigenschaften verbunden ist. Des Weiteren scheint auch die Menge der diffundierenden silangruppen-enthaltenden Prepolymere Auswirkungen auf die mechanischen Eigenschaften zu haben, sodass die verbesserten mechanischen Eigenschaften nicht durch ein einfaches Zumischen der silangruppen-enthaltende Prepolymere zu einem Basislack erhältlich wären. Ohne durch die Theorie gebunden zu sein, scheint die Kombination der zwei definierten Schichten und die gesteuerte Diffusion der Decklackkomponente zu den verbesserten Eigenschaften des Verbundes beizutragen. Weiterhin ist vorteilhaft, dass die erfindungsgemäß einsetzbare Decklackschicht die optischen Eigenschaften des Verbundes nur unwesentlich verändert, sodass die Farbe und andere optische Effekte im hohen Maße über die Eigenschaften der Basislackschicht bestimmt werden können. Insofern können aufwendige Prüfungen von Farbveränderungen des Verbundes als Funktion der aufgebrachten Decklackschicht entfallen.

Erfindungsgemäß ist ein Schichtverbund aus einer unteren Basislack- und einer darüber angeordneten Decklackschicht. Der erfindungsgemäße mindestens zwei-schichtige Aufbau kann als alleiniger Aufbau zu Modifizierung eines Substrates oder in Kombination mit weiteren Schichten verwendet werden. So ist es beispielsweise möglich, dass ausgehend vom Substrat neben der Basislackschicht noch weitere Lackschichten vorliegen. Die weiteren Lackschichten liegen dann unterhalb der Basislackschicht. Der erfindungsgemäße Lackschichtaufbau zeichnet sich also durch einen physikalischen Kontakt zwischen der erfindungsgemäßen Basislackschicht und der erfindungsgemäßen Decklackschicht aus. Oberhalb der Decklackschicht können zudem noch weitere Schichten angeordnet sein, welche unabhängig von der erfindungsgemäßen Decklackschicht nach deren Härtung aufgebracht werden können. Es ist also auch ein Sandwich aus dem erfindungsgemäßen Verbund im Sinne der Erfindung, welches im inneren die Kombination beider Schichten aufweist. Dies bedeutet, dass von der Substrat- zur Luftseite hin, sich der Basislack näher zum Substrat und die Decklackschicht sich näher zur Luft befindet. Die obere Decklackschicht kann dabei eine Klarlackschicht sein, dies bedeutet, dass die Decklackschicht transparent ist und die optischen Eigenschaften des Schichtverbundes über die optischen Eigenschaften der Basislackschicht bestimmt werden.

Unter Transparenz eines pigmentieren oder unpigmentierten System wird seine Eigenschaft verstanden, das Licht möglichst wenig zu streuen. Dementsprechend soll bei der Applikation auf einem schwarzen Untergrund die Farbänderung des schwarzen Untergrundes möglichst gering sein. Die Transparenz des pigmentierten oder unpigmentierten Systems ist umso höher, je kleiner der Farbabstand zum schwarzen Untergrund ist. Die Transparenz einer Decklackschicht wird anhand von DIN 55988:2013-04 bestimmt.

Der Schichtverbund ist auf einem Substrat angeordnet. Geeignete Substrate sind dabei dem Fachmann bekannt. So kann der Schichtverbund auf festen Untergründen wie Glas oder Metall aufgebracht werden. Es ist aber auch möglich, dass polymere Trägermaterialien als Substrate verwendet werden, beispielsweise Leiterplatten. Geeignete Metalloberflächen sind beispielsweise Eisen, Stahl, Aluminium oder dergleichen. Für eine Beschichtung können die Substrate unbeschichtet oder beschichtet sein. Als Beschichtung können beispielsweise bereits Grundierungen und/oder Füller auf das Substrat aufgebracht worden sein, bevor dieses im erfindungsgemäßen Verfahren eingesetzt wird. Beispiele für Grundierungen sind insbesondere kathodische Tauchlackierungen wie sie bei der Automobilerstlackierung verwendet werden, lösemittelhaltige oder wässrige Grundierungen für Kunststoffe, insbesondere für Kunststoffe mit niedriger Oberflächenspannung wie PP oder PP-EPDM.

Es kann sich bei den bereitzustellenden Substraten um eine Karosserie oder Teile davon, die einen oder mehrere der zuvor genannten Werkstoffe umfasst. Bevorzugt umfasst die Karosserie oder deren Teile einen oder mehrere Werkstoffe, ausgewählt aus Metall, Kunststoff oder deren Mischungen.

Das Substrat kann Metall umfassen, insbesondere kann das Substrat zu 80 Gew.-%, 70 Gew.-%, 60 Gew.-%, 50 Gew.-%, 25 Gew.-%, 10 Gew.-%, 5 Gew.-%, 1 Gew.-% aus Metall bestehen.

Das Substrat kann zumindest teilweise aus einem Verbundwerkstoff, insbesondere aus einem Verbundwerkstoff, umfassend Metall und/oder Kunststoff bestehen.

Der Basislack enthält zu größer oder gleich 50 Gew.-% und kleiner 100 Gew.-%, bevorzugt zu größer oder gleich 40 Gew.-% und kleiner oder gleich 99,5 Gew.-%, Polymere ausgesucht aus der Gruppe bestehend aus Polyacrylaten, Polyurethanen, Polyetherpolyolen, Polycarbonatpolyolen, Polyesterpolyolen, Melaminharzen, Alkydharzen oder Mischungen daraus. Gerade diese Gruppe an Basislackpolymeren kann eine hinreichende Diffusion der silangruppen-enthaltenden Prepolymere aus der Decklackschicht ermöglichen. Auf diese Art und Weise kann ein festerer Verbund zwischen beiden Schichten entstehen, welches zu den verbesserten mechanischen Eigenschaften des Verbundes führt. Die Gewichts-%-Angabe bezieht sich dabei auf den getrockneten und gehärteten Basislack. Der Basislack kann die Gruppe an oben aufgeführten Polymere des Weiteren bevorzugt zu größer oder gleich 60 Gew.-% und kleiner 100 Gew.-%, bevorzugt zu größer oder gleich 60 Gew.-% und kleiner oder gleich 99,5 Gew.-%, und des Weiteren bevorzugt zu größer oder gleich 75 Gew.-% und kleiner 100 Gew.-%, bevorzugt zu größer oder gleich 75 Gew.-% und kleiner oder gleich 99,5 Gew.-%, aufweisen. Innerhalb dieser Bereiche lassen sich die bevorzugten mechanischen Eigenschaften erhalten. Der Rest des Basislacks kann durch weitere, dem Fachmann bekannte Zusatzstoffe wie beispielsweise Farbpigmente gebildet werden. Erfindungsgemäß addieren sich die Anteile des Basislacks und die weiteren, durch die Decklackschicht eindiffundierten Bestandteile zu 100 Gew.-%.

Der Basislack kann ein Einkomponenten(1K)-System ein Zweikomponenten(2K)- oder Mehrkomponenten(3K, 4K)-System sein.

Unter einem Einkomponenten(1K)-System ist ein thermisch härtender Beschichtungsstoff zu verstehen, bei dem das Bindemittel und das Vernetzungsmittel nebeneinander, d.h. in einer Komponente, vorliegen.

Es kann hierunter auch ein Beschichtungsstoff verstanden werden, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Der erste Bestandteil des Beschichtungsstoffs des Basislacks kann mindestens ein, insbesondere ein, gesättigtes, ungesättigtes und/oder mit olefinisch ungesättigten Verbindungen gepfropftes, ionisch und/oder nicht ionisch stabilisiertes Polyurethan (A), vorzugsweise auf der Basis aliphatischer, cycloaliphatischer, aliphatisch-cycloaliphatischer, aromatischer, araliphatischer, aliphatisch-aromatischer und/oder cycloaliphatisch-aromatischer Polyisocyanate. Zur Stabilisierung kann das Polyurethan (A) entweder enthalten
(a1) funktionelle Gruppen, die durch Neutralisationsmittel und/oder Quaternisierungsmittel in Kationen überführt werden können, und/oder kationische Gruppen oder
(a2) funktionelle Gruppen, die durch Neutralisationsmittel in Anionen überführt werden können, und/oder anionische Gruppen und/oder
(a3) nicht ionische hydrophile Gruppen

In dem Beschichtungsstoff sind sie in den üblichen und bekannten Mengen enthalten.

Ist der Beschichtungsstoff physikalisch, thermisch selbst vernetzend oder thermisch selbst vernetzend und mit aktinischer Strahlung härtbar, liegt sein Gehalt an Polyurethanen (A) vorzugsweise bei 50 bis 100 Gew.-%, bevorzugt 50 bis 90 Gew.-% und insbesondere 50 bis 80 Gew.-%, jeweils bezogen auf den filmbildenden Festkörper des Beschichtungsstoffs.

Ist der Beschichtungsstoff thermisch fremd vernetzend oder thermisch fremd vernetzend und mit aktinischer Strahlung härtbar, liegt sein Gehalt an Polyurethanen (A) vorzugsweise bei 10 bis 80, bevorzugt 15 bis 75 und insbesondere 20 bis 70 Gew.-%, jeweils bezogen auf den filmbildenden Festkörper des Beschichtungsstoffs.

Unter dem filmbildenden Festkörper ist die Summe aller Bestandteile des Beschichtungsstoffs zu verstehen, die den Festkörper der hieraus hergestellten thermoplastischen oder duroplastischen Materialien, vorzugsweise der thermoplastischen oder duroplastischen Beschichtungen, Klebschichten, Dichtungen, Folien und Formteile insbesondere der duroplastischen Beschichtungen, aufbauen, zu verstehen.

Der zweite Bestandteil des Beschichtungsstoffs kann ein Netz- oder Dispergierungsmittel (B) sein, das aus der Gruppe, bestehend aus hyperverzweigten Polymeren, polyethermodifizierten Polydimethylsiloxanen, ionischen und nicht-ionischen (Meth)Acrylatcopolymerisaten, hochmolekularen Blockcopolymerisaten mit pigmentaffinen Gruppen und Dialkylsulfosuccinaten, ausgewählt ist. Insbesondere werden hyperverzweigte Polymere verwendet.

Die Netz- oder Dispergierungsmittel (B) sind an sich bekannte, im Handel erhältliche Materialien und werden beispielsweise von der Firma BASF unter den Marken Starfactant 20 und Hydropalat 875, von der Firma Byk Chemie unter der Marke Disperbyk 162, 163 und 182 und Byk 348, 355, 381 und 390, von der Firma Coatex unter den Marken Coatex P90 und BP3 und der Firma Efka unter der Marke Efka 4580 vertrieben. Insbesondere wird Starfactant 20 verwendet.

Die Netz- oder Dispergierungsmittel (B) werden in den üblichen und bekannten, wirksamen Mengen verwendet. Vorzugsweise werden sie in einer Menge von 0,01 bis 5 bevorzugt 0,05 bis 2,5 und insbesondere 0,1 bis 1,5 Gew.-%, jeweils bezogen auf den Beschichtungsstoff verwendet.

Der dritte Bestandteil des Beschichtungsstoffs kann mindestens ein organisches Lösemittel (C) sein. Geeignete Lösungsmittel sind beispielsweise in der Deutschen Patentanmeldung DE 102 005 060 A1, Seite 5 bis Seite 6, Absätze [0038] bis [0040] beschrieben. Bevorzugt kann das Lösungsmittel Triethylenglykol sein.

Die Menge des organischen Lösemittels (C) kann breit variieren und so optimal den Erfordernissen des Einzelfalls angepasst werden. Im Hinblick auf die wässrige Natur des Beschichtungsstoffs ist man aber bestrebt, seinen Gehalt an organischem Lösemittel (C) so gering wie möglich zu halten. Hierbei ist es ein besonderer Vorteil, dass ein Gehalt des Beschichtungsstoffs an organischem Lösemittel (C) von 0,1 bis 10, bevorzugt 0,5 bis 7 und insbesondere 0,5 bis 5 Gew.-%, jeweils bezogen auf den Beschichtungsstoff, ausreicht, um einen vorteilhaften technischen Effekte zu erzielen.

Darüber hinaus kann der Beschichtungsstoff noch einen Zusatzstoff (D) enthalten. Vorzugsweise enthält er mindestens zwei Zusatzstoffe (D). Bevorzugt wird der Zusatzstoff (D) aus der Gruppe der auf dem Gebiet der Beschichtungsstoffe üblicherweise verwendeten Zusatzstoffe ausgewählt. Besonders bevorzugt wird der Zusatzstoff (D) aus der Gruppe, bestehend aus rückstandsfrei oder im Wesentlichen rückstandsfrei thermisch zersetzbaren Salzen; von den Polyurethanen (A) verschiedenen physikalisch, thermisch und/oder mit aktinischer Strahlung härtbaren Bindemitteln; Vernetzungsmitteln; von den organischen Lösemitteln (C) verschiedenen organischen Lösemitteln; thermisch härtbaren Reaktivverdünnern; mit aktinischer Strahlung härtbaren Reaktivverdünnern; farb- und/oder effektgebenden Pigmenten; transparenten Pigmenten; Füllstoffen; molekulardispers löslichen Farbstoffen; Nanopartikeln; Lichtschutzmitteln; Antioxidantien; Entlüftungsmitteln; Emulgatoren; Slipadditiven; Polymerisationsinhibitoren; Initiatoren der radikalischen Polymerisation; thermolabilen radikalischen Initiatoren; Haftvermittlern; Verlaufmitteln; filmbildenden Hilfsmitteln, wie Verdicker und strukturviskose Sag control agents (SCA); Flammschutzmitteln; Korrosionsinhibitoren; Rieselhilfen; Wachsen; Sikkativen; Bioziden und Mattierungsmitteln; ausgewählt.

Geeignete Zusatzstoffe (D) der vorstehend genannten Art sind beispielsweise aus der deutschen Patentanmeldung DE 199 48 004 A1, Seite 14, Zeile 4, bis Seite 17, Zeile 5, der deutschen Patentanmeldung DE 199 14 98 A1, Spalte 11, Zeile 9, bis Spalte 15, Zeile 63, oder dem deutschen Patent DE 100 43 405 C1, Spalte 5, Absätze [0031] bis [0033], bekannt. Sie werden in den üblichen und bekannten, wirksamen Mengen eingesetzt.

Der Festkörpergehalt des Beschichtungsstoffs kann sehr breit variieren und daher den Erfordernissen des Einzelfalls optimal angepasst werden. In erster Linie richtet sich der Festkörpergehalt nach der für die Applikation, insbesondere Spritzapplikation, erforderlichen Viskosität, sodass er vom Fachmann aufgrund seines allgemeinen Fachwissens gegebenenfalls unter Zuhilfenahme weniger orientierender Versuche eingestellt werden kann. Vorzugsweise liegt der Festkörpergehalt bei 5 bis 70, bevorzugt 10 bis 65 und insbesondere 15 bis 60 Gew.-%, jeweils bezogen auf den Beschichtungsstoff.

Die Herstellung des Beschichtungsstoffs erfolgt vorzugsweise mit Hilfe eines Beschichtungsverfahrens. Dabei werden die vorstehend beschriebenen Bestandteile (A), (B) und (C) sowie gegebenenfalls (D) in einem wässrigen Medium, insbesondere in Wasser, dispergiert, wonach man die resultierende Mischung homogenisiert. Methodisch gesehen, weist das Verfahren keine methodischen Besonderheiten auf, sondern kann mit Hilfe der üblichen und bekannten Mischverfahren und Mischaggregate, wie Rührkessel, Dissolver, Rührwerksmühlen, Kneter, statische Mischer, Extruder, oder in einem kontinuierlichen Prozess, durchgeführt werden.

Wegen der Vorteile des Beschichtungsstoffs und des mit Hilfe des Verfahrens hergestellten Beschichtungsstoffs können zahlreiche Verwendungszwecken erfüllt werden. Vorzugsweise werden sie für die Herstellung der thermoplastischen und duroplastischen, insbesondere duroplastischen, Materialien verwendet. Bevorzugt werden sie als Beschichtungsstoffe für die Herstellung thermoplastischer und duroplastischer, insbesondere duroplastischer Beschichtungen, die mit grundierten und ungrundierten Substraten aller Art haftfest oder wieder ablösbar verbunden sein können, verwendet.

Beispiele geeigneter Substrate sind aus der deutschen Patentanmeldung DE 199 48 004 A1, Seite 17, Zeilen 12 bis 36, oder dem deutschen Patent DE 100 43 405 C1, Spalte 2, Absatz [0008], bis Spalte 3, Absatz [0017], bekannt.

Besonders bevorzugt werden die Beschichtungsstoffe als Decklacke zur Herstellung von Decklackierungen oder als Wasserbasislacke zur Herstellung farb- und/oder effektgebender Mehrschichtlackierungen eingesetzt. Ganz besonders bevorzugt werden sie dabei als Wasserbasislacke zur Herstellung farb- und/oder effektgebender Basislackierungen von Mehrschichtlackierungen, bevorzugt Mehrschichtlackierungen für Automobilkarosserien, verwendet.

Ganz besonders bevorzugt können mit diesen Basislacken Mehrschichtlackierungen durch Nass-innass-Verfahren hergestellt werden, wobei man mindestens einen Wasserbasislack auf ein grundiertes oder ungrundiertes Substrat appliziert, wodurch mindestens eine Wasserbasislackschicht resultiert.

Aufgrund der anwendungstechnischen Eigenschaften des Beschichtungsstoffs weisen die hieraus hergestellten thermoplastischen und duroplastischen Materialien ebenfalls ein hervorragend ausgewogenes physikalisch chemisches, optisches und mechanisches Eigenschaftsprofil auf. Deshalb haben auch die Folien und Formteile sowie die Substrate die mit den Beschichtungen beschichtet sind einen besonders hohen Gebrauchswert und eine lange Gebrauchsdauer.

Weitere Basislackschichten können Basislackschichten für niedrige Einbrenntemperaturen sein.

Eine beispielhafte Ausführungsform schließt eine härtbare Beschichtungszusammensetzung für einen Basislack mit einer niedrigen Einbrenntemperatur ein: eine vernetzbare Komponente, umfassend ein Säure-funktionelles Acryl-Copolymer, polymerisiert aus einem Monomergemisch, umfassend 2 Prozent bis 12 Prozent von eine oder mehrere Carbonsäuregruppe(n) enthaltenden Monomeren, wobei die Prozentsätze auf dem Gesamtgewicht des Säure-funktionellen Acryl-Copolymers basieren, eine vernetzende Komponente; und ein Steuerungsmittel für eine niedrige Einbrenntemperatur, umfassend eine Rheologie-Komponente, ausgewählt aus einem amorphen Kieselgel, einem Ton oder einer Kombination davon, wobei die Rheologie-Komponente in einer Menge von etwa 0,1 bis etwa 10 Gew.-% vorliegt und etwa 0,1 Gew.-% bis etwa 10 Gew.-% Polyharnstoff, wobei die Prozentsätze auf dem Gesamtgewicht der vernetzbaren und vernetzenden Komponenten basieren.

In einer beispielhaften Ausführungsform schließt das Mehr-Schicht-Beschichtungssystem ein: eine härtbare Basislack-Beschichtung für eine niedrige Einbrenntemperatur, umfassend: eine vernetzbare Komponente, umfassend ein Säure-funktionelles Acryl-Copolymer, polymerisiert aus einem Monomergemisch, umfassend 2 Gew.-% bis 12 Gew.-& von eine oder mehrere Carbonsäuregruppe(n) enthaltenden Monomeren, wobei die Prozentsätze auf dem Gesamtgewicht des Säure-funktionellen Acryl-Copolymers basieren, eine vernetzende Komponente; und ein Steuerungsmittel für eine niedrige Einbrenntemperatur, umfassend eine Rheologie-Komponente, ausgewählt aus einem amorphen Kieselgel, einem Ton oder einer Kombination davon, wobei die Rheologie-Komponente in einer Menge von etwa 0,1 bis etwa 10 Gew.-% vorliegt und etwa 0,1 Gew.-% bis etwa 10 Gew.-% Polyharnstoff, wobei die Prozentsätze auf dem Gesamtgewicht der vernetzbaren und vernetzenden Komponenten basieren.

In Beschichtungs-Anwendungen, insbesondere den Kraftfahrzeug-Ausbesserungs- oder OEM-Anwendungen, ist ein entscheidender Faktor die Produktivität, d. h. die Fähigkeit einer Schicht einer Beschichtungszusammensetzung schnell zu einem "Strike-in"-beständigen bzw. vermischungsfesten Zustand zu trocknen, so dass eine anschließende Beschichtungsschicht, wie eine Schicht, gebildet aus einer klaren Beschichtungszusammensetzung, die darunterliegende Schicht nicht negativ beeinflusst. Ist die oberste Schicht einmal aufgetragen, sollte der mehrschichtige Aufbau bzw. System dann ausreichend schnell härten ohne negatives Beeinflussen der Gleichförmigkeit von Farbe und Aussehen. Die vorliegende Erfindung spricht die vorangehenden Aspekte durch Nutzen einer einzigartigen Vernetzungs-Technologie und eines Additivs an. Somit schließt die vorliegende Beschichtungszusammensetzung eine vernetzbare und vernetzende Komponente ein.

Die vernetzbare Komponente schließt etwa 2 Gew.-% bis etwa 25 Gew.-%, vorzugsweise etwa 3 Gew.-% bis etwa 20 Gew.-%, bevorzugter etwa 5 Gew.-% bis etwa 15 Gew.-% von einem oder mehreren Säure-funktionellen Acryl-Copolymere ein, wobei alle Prozentsätze auf dem Gesamtgewicht der vernetzbaren Komponente basieren. Wenn die Zusammensetzung mehr als die obere Grenze des Säure-funktionellen Acryl-Copolymers enthält, weist die erhaltene Zusammensetzung in der Regel mehr als die geforderte Auftragungsviskosität auf. Wenn die Zusammensetzung weniger als die untere Grenze des Säure-funktionellen Copolymers enthält, würde die erhaltene Beschichtung unwesentliche Strike-in-(bzw. Vermischungs-)-Eigenschaften für einen mehrschichtigen Aufbau bzw. System oder Schuppen bzw. Blättchen-Orientierungs-Steuerung im Allgemeinen aufweisen.

Die vernetzbare Komponente enthält ein Säure-funktionelles Acryl-Copolymer, polymerisiert aus einem Monomergemisch, das etwa 2 Gew.-% bis etwa 12 Gew.-%, vorzugsweise etwa 3 Gew.-% bis etwa 10 Gew.-%, bevorzugter etwa 4 Gew.-% bis etwa 6 Gew.-% von einer oder mehreren Carbonsäuregruppe enthaltenden Monomeren enthält, wobei alle Prozentsätze auf dem Gesamtgewicht des Säure-funktionellen Acryl-Copolymers basieren. Wenn die Menge des Carbonsäure-Gruppe-enthaltenden Monomers in dem Monomergemisch die obere Grenze übersteigt, würden die Beschichtungen, die sich aus einer solchen Beschichtungszusammensetzung ergeben, unannehmbare Wasserempfindlichkeit aufweisen und wenn die Menge weniger als die untere Grenze ist, würde die erhaltene Beschichtung unwesentliche "Strike-in"-Eigenschaften für einen mehrschichtigen Aufbau bzw. System oder Schuppen-Orientierungs-Steuerung im Allgemeinen aufweisen.

Das Säure-funktionelle Acryl-Copolymer hat vorzugsweise ein gewichtsmittleres Molekulargewicht laut GPC (in g/mol), entsprechend DIN 55672:2016-03 bestimmt, im Bereich von etwa 8000 bis etwa 100000, vorzugsweise von etwa 10000 bis etwa 50000 und bevorzugter von etwa 12000 bis etwa 30000. Das Copolymer hat vorzugsweise eine Polydispersität im Bereich von etwa 1,05 bis etwa 10,0, vorzugsweise im Bereich von etwa 1,2 bis etwa 8 und bevorzugter im Bereich von etwa 1,5 bis etwa 5. Das Copolymer hat vorzugsweise eine T_{g} im Bereich von etwa -5 °C bis etwa +100 °C, vorzugsweise von etwa 0 °C bis etwa 80 °C und bevorzugter von etwa 10 °C bis etwa 60 °C.

Die zur Verwendung in der vorliegenden Erfindung geeigneten Carbonsäuregruppe(n) enthaltenden Monomere schließen (Meth)acrylsäure, Crotonsäure, Ölsäure, Zimtsäure, Glutaconsäure, Muconsäure, Undecylensäure, Itaconsäure, Crotonsäure, Fumarsäure, Maleinsäure oder eine Kombination davon ein. (Meth)acrylsäure ist bevorzugt. Es ist verständlich, dass Nutzer auch das Bereitstellen des Säure-funktionellen Acryl-Copolymers mit Carbonsäuregruppen durch Erzeugen eines Copolymers, polymerisiert aus einem Monomergemisch, das Anhydride der vorstehend erwähnten Carbonsäuren enthält und dann Hydrolysieren solcher Copolymere, um das erhaltene Copolymer mit Carbonsäuregruppen zu versehen, in Erwägung ziehen. Malein- und Itaconsäureanhydride sind bevorzugt. Die Nutzer können weiterhin das Hydrolysieren solcher Anhydride in deren Monomergemisch vor der Polymerisation des Monomergemisches zu dem Säure-funktionellen Acryl-Copolymer in Erwägung ziehen.

Es kann angenommen werden, dass das Vorliegen von Carbonsäuregruppen in dem Copolymer der vorliegenden Erfindung die Viskosität der erhaltenen Beschichtungszusammensetzung auf Grund des physikalischen Netzwerks zu erhöhen scheint, welches durch die gut bekannten Wasserstoffbindungen von Carboxylgruppen gebildet wurde. Im Ergebnis unterstützt solche angestiegene Viskosität "Strike-in"-Eigenschaften in mehrschichtigen Aufbauten bzw. Systemen und Schuppen-Orientierungs-Steuerung im Allgemeinen.

Das zur Verwendung in der vorliegenden Erfindung geeignete Monomergemisch schließt etwa 5 Prozent bis etwa 40 Prozent, vorzugsweise etwa 10 Prozent bis etwa 30 Prozent, eines oder mehrerer funktioneller (Meth)acrylat-Monomere ein, wobei alle auf dem Gesamtgewicht des Säure-funktionelles Acryl-Copolymers basieren. Es sollte angemerkt werden, dass wenn die Menge der funktionellen (Meth)acrylat-Monomere in dem Monomergemisch die obere Grenze übersteigt, die Topfzeit der erhaltenen Beschichtungszusammensetzung vermindert ist und wenn weniger als die untere Grenze verwendet wird, sie die erhaltenen Beschichtungseigenschaften, wie Haltbarkeit, negativ beeinflusst. Das funktionelle (Meth)acrylat-Monomer kann mit einer oder mehreren vernetzbaren Gruppen, ausgewählt aus einem primären Hydroxyl, sekundärem Hydroxyl oder einer Kombination davon, bereitgestellt werden.

Einige von geeignetem Hydroxyl enthaltenden (Meth)acrylat-Monomeren können die nachstehende Struktur aufweisen: 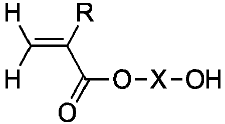 worin R H oder Methyl ist und X eine zweiwertige Einheit ist, die substituierte oder unsubstituierte C₁ bis C₁₈ lineare aliphatische Einheit oder substituierte oder unsubstituierte C₃ bis C₁₈ verzweigte oder cyclische aliphatische Einheit sein kann. Einige von den geeigneten Substituenten schließen Nitril, Amid, Halogenid, wie Chlorid, Bromid, Fluorid, Acetyl, Acetoacetyl, Hydroxyl, Benzyl und Aryl ein. Einige spezielle Hydroxyl enthaltende (Meth)acrylat-Monomere in dem Monomergemisch schließen 2-Hydroxyethyl-(meth)acrylat, 2-Hydroxypropyl-(meth)acrylat, 3-Hydroxypropyl-(meth)acrylat, und 4-Hydroxybutyl-(meth)acrylat ein.

Das Monomergemisch kann auch ein oder mehrere nicht-funktionelle (Meth)acrylat-Monomere einschließen. Wenn hier verwendet, sind nicht-funktionelle Gruppen jene, die mit einer vernetzenden Komponente nicht vernetzen. Einige von geeigneten nicht-funktionellen C₁ bis C₂₀ Alkyl-(meth)acrylaten schließen Methyl-(meth)acrylat, Ethyl-(meth)acrylat, Propyl-(meth)acrylat, Butyl-(meth)acrylat, Pentyl-(meth)acrylat, Hexyl-(meth)acrylat, Octyl-(meth)acrylat, Nonyl-(meth)acrylat, Isodecyl-(meth)acrylat und Lauryl-(meth)acrylat; verzweigte Alkyl-Monomere, wie Isobutyl-(meth)acrylat, t-Butyl-(meth)acrylat und 2-Ethylhexyl-(meth)acrylat; und cyclische Alkyl-Monomere, wie Cyclohexyl-(meth)acrylat, Methylcyclohexyl-(meth)acrylat, Trimethylcyclohexyl-(meth)acrylat, tertiär-Butylcyclohexyl-(meth)acrylat und Isobornyl-(meth)acrylat ein. Isobornyl-(meth)acrylat und Butylacrylat sind bevorzugt.

Das Monomergemisch kann ebenfalls ein oder mehrere von anderen Monomeren für den Zweck des Erreichens der gewünschten Eigenschaften, wie Härte, Aussehen und Beschädigungs-Beständigkeit, einschließen. Einige von den anderen solchen Monomeren schließen zum Beispiel Styrol, alpha-Methylstyrol, Acrylnitril und Methacrylnitril ein. Falls enthalten, schließt das Monomergemisch vorzugsweise solche Monomere im Bereich von etwa 5 Prozent bis etwa 30 Prozent ein, wobei alle Prozentsätze in Gew.-%, basierend auf dem Gesamtgewicht der Polymerfeststoffe, vorliegen. Styrol ist bevorzugt.

Jedes herkömmliche Masse- oder Lösungs-Polymerisations-Verfahren kann verwendet werden, um das Säure-funktionelle Acryl-Copolymer der vorliegenden Erfindung herzustellen. Eines von den geeigneten Verfahren zur Herstellung des Copolymers der vorliegenden Erfindung schließt ein freies radikalisches Lösungs-Polymerisieren des vorstehend beschriebenen Monomergemisches ein.

Die Polymerisation des Monomergemisches kann durch Zusetzen herkömmlicher Wärmestarter, wie Azos, beispielhaft angegeben durch Vazo 64, bezogen von DuPont Company, Wilmington, Delaware; und Peroxide, wie t-Butylperoxyacetat, gestartet werden. Das Molekulargewicht des erhaltenen Copolymers kann durch Einstellen der Reaktionstemperatur, der Auswahl und der Menge des verwendeten Starters, wie durch den Fachmann ausgeführt, gesteuert werden.

Die vernetzende Komponente der vorliegenden Erfindung kann ein oder mehrere Polyisocyanate, Melamine oder eine Kombination davon einschließen. Polyisocyanate sind bevorzugt.

Typischerweise wird das Polyisocyanat im Bereich von etwa 2 bis etwa 10, vorzugsweise etwa 2,5 bis etwa 8, bevorzugter etwa 3 bis etwa 5 Isocyanat-Funktionalitäten, bereitgestellt. Im Allgemeinen liegt das Verhältnis von Äquivalenten von Isocyanat-Funktionalitäten auf das Polyisocyanat pro Äquivalent von allen der funktionellen Gruppen, die in den vernetzenden Komponenten vorliegen, in Bereichen von etwa 0,5/1 bis etwa 3,0/1, vorzugsweise von etwa 0,7/1 bis etwa 1,8/1, bevorzugter von etwa 0,8/1 bis etwa 1,3/1. Einige geeignete Polyisocyanate schließen aromatische, aliphatische oder cycloaliphatische Polyisocyanate, trifunktionelle Polyisocyanate und Isocyanat-funktionelle Addukte von einem Polyol und difunktionellen Isocyanaten ein. Einige der besonderen Polyisocyanate schließen Diisocyanate, wie 1,6-Hexamethylendiisocyanat, 1,5-Pentamethylendiisocyanat, Isophorondiisocyanat, 4,4'-Biphenylendiisocyanat, Toluoldiisocyanat, 4,4-Methylendicyclohexyldiisocyanat, Biscyclohexyldiisocyanat, Xylylendiisocyanat, Tetramethylenxyloldiisocyanat, 1,4-H6-Xylylendiisocyanat, Ethylethylendiisocyanat, 1-Methyltrimethylendiisocyanat, 1,3-Phenylendiisocyanat, 1,5-Napthalindiisocyanat, Bis-(4-isocyanatocyclohexyl)-methan und 4,4'-Diisocyanatodiphenylether, ein.

Einige der geeigneten trifunktionellen Polyisocyanate schließen Triphenylmethantriisocyanat, 1,3,5-Benzoltriisocyanat und 2,4,6-Toluoltriisocyanat ein. Trimere von Diisocyanat, wie das Trimer von Hexamethylendiisocyanat, vertrieben unter der Handelsmarke Desmodur N-3390 durch Covestro AG, Leverkusen, Nordrhein-Westfalen, und das Trimer von Isophorondiisocyanat, sind auch geeignet. Weiterhin sind trifunktionelle Addukte von Triolen und Diisocyanaten auch geeignet. Trimere von Diisocyanaten sowie Trimere von Isophoron-, Pentamethylen- und Hexamethylendiisocyanaten sind bevorzugt.

Typischerweise kann die Beschichtungszusammensetzung etwa 0,1 Gew.-% bis etwa 40 Gew.-%, vorzugsweise etwa 15 Gew.-% bis etwa 35 Gew.-% und bevorzugter etwa 20 Gew.-% bis etwa 30 Gew.-% des Melamins einschließen, wobei die Prozentsätze auf dem Gesamtgewicht von Zusammensetzungsfeststoffen basieren.

Einige der geeigneten Melamine schließen monomeres Melamin, polymeres MelaminFormaldehyd-Harz oder eine Kombination davon ein. Die monomeren Melamine schließen Melamine mit niedrigem Molekulargewicht ein, die im Durchschnitt drei oder mehrere MethylolGruppen, verethert mit einem einwertigen C₁ bis Cs-Alkohol, wie Methanol, n-Butanol oder Isobutanol, pro Triazinkern, enthalten und einen mittleren Kondensationsgrad bis zu etwa 2 und vorzugsweise im Bereich von etwa 1,1 bis etwa 1,8 aufweisen, und einen Anteil von einkerniger Spezies von nicht weniger als etwa 50 Gew.-% aufweisen. Im Gegensatz dazu haben die polymeren Melamine einen mittleren Kondensationsgrad von mehr als etwa 1,9. Einige solche geeignete monomere Melamine schließen alkylierte Melamine, wie methylierte, butylierte, isobutylierte Melamine und Gemische davon ein. Viele von diesen geeigneten monomeren Melaminen werden kommerziell geliefert. Zum Beispiel liefern Cytec Industries Inc., West Patterson, New Jersey, Cymel 301 (Polymerisationsgrad von 1,5, 95 % Methyl und 5 % Methylol), Cymel 350 (Polymerisationsgrad von 1,6, 84 % Methyl und 16 % Methylol), 303, 325, 327, 370 und XW3106, welche alle monomere Melamine sind. Geeignete polymere Melamine schließen Melamin mit hohem Aminoanteil (teilweise alkyliert, -N, -H), bekannt als Resimene BMP5503 (Molekulargewicht 690, Polydispersität von 1,98, 56 % Butyl, 44 % Amino), welches von Solutia Inc., St. Louis, Missouri, bezogen wird, oder Cymel1158, bereitgestellt durch Cytec Industries Inc., West Patterson, New Jersey, ein. Cytec Industries Inc. liefern auch Cymel 1130 mit 80 Prozent Feststoffen (Polymerisationsgrad von 2,5), Cymel 1133 (48 % Methyl, 4 % Methylol und 48 % Butyl), beide von ihnen sind polymere Melamine.

Falls erwünscht, können geeignete Katalysatoren, die in der vernetzbaren Komponente enthalten sind, das Härtungsverfahren eines Pot-Mix bzw. Mischansatzes der Beschichtungszusammensetzung beschleunigen.

Wenn die vernetzende Komponente Polyisocyanat einschließt, schließt die vernetzbare Komponente der Beschichtungszusammensetzung vorzugsweise eine katalytisch aktive Menge von einem oder mehreren Katalysatoren zum Beschleunigen des Härtungsverfahrens ein. Im Allgemeinen liegt eine katalytisch aktive Menge des Katalysators in der Beschichtungszusammensetzung in Bereichen von etwa 0,001 Prozent bis etwa 5 Prozent, vorzugsweise Bereichen von etwa 0,005 Prozent bis etwa 2 Prozent, bevorzugter Bereichen von etwa 0,01 Prozent bis etwa 1 Prozent, wobei alle in Gew.-%, basierend auf dem Gesamtgewicht von vernetzbaren und vernetzenden Komponentenfeststoffen, vorliegen. Eine breite Vielzahl von Katalysatoren kann verwendet werden, wie Zinn-Verbindungen, einschließlich Dibutylzinndilaurat und Dibutylzinndiacetat; tertiäre Amine, wie Triethylendiamin. Diese Katalysatoren können einzeln oder in Verbindung mit Carbonsäuren, wie Essigsäure oder Benzoesäure, verwendet werden. Ein kommerziell erhältlicher Katalysator vertrieben unter der Handelsmarke Fastcat 4202, d.h. Dibutylzinndilaurat der Arkema North America, Inc. Philadelphia, Pennsylvania, ist besonders geeignet.

In dem Fall, dass die vernetzende Komponente Melamin einschließt, schließt sie ebenfalls vorzugsweise eine katalytisch aktive Menge von einem oder mehreren sauren Katalysatoren zum weiteren Erhöhen des Vernetzens der Komponenten beim Härten ein. Im Allgemeinen liegt die katalytisch aktive Menge des sauren Katalysators in der Beschichtungszusammensetzung in Bereichen von etwa 0,1 Prozent bis etwa 5 Prozent, vorzugsweise in Bereichen von etwa 0,1 Prozent bis etwa 2 Prozent, bevorzugter in Bereichen von etwa 0,5 Prozent bis etwa 1,2 Prozent, wobei alle in Gew.-%, basierend auf dem Gesamtgewicht von vernetzbaren und vernetzenden Komponenten-Feststoffen vorliegen. Einige geeignete saure Katalysatoren enthalten aromatische Sulfonsäuren, wie Dodecylbenzolsulfonsäure, para-Toluolsulfonsäure und Dinonylnaphthalinsulfonsäure, wobei alle von ihnen entweder unblockiert oder mit einem Amin, wie Dimethyloxazolidin und 2-Amino-2-methyl-1-propanol, N,N-Dimethylethanolamin oder einer Kombination davon, blockiert sind. Andere saure Katalysatoren, die verwendet werden können, sind starke Säuren, wie Phosphorsäuren, ganz besonders Phenylsäurephosphat, das unblockiert oder mit einem Amin blockiert sein kann.

Die vernetzbare Komponente der Beschichtungszusammensetzung kann weiterhin im Bereich von etwa 0,1 Prozent bis etwa 95 Prozent, vorzugsweise im Bereich von etwa 10 Prozent bis etwa 90 Prozent, bevorzugter im Bereich von etwa 20 Prozent bis etwa 80 Prozent und besonders bevorzugt im Bereich von etwa 30 Prozent bis etwa 70 Prozent von einem Acryl-Polymer, einem Polyester oder einer Kombination davon einschließen, wobei alle auf dem Gesamtgewicht der vernetzbaren Komponente basieren.

Das zur Verwendung in der vorliegenden Erfindung geeignete Acryl-Polymer kann ein gewichtsmittleres Molekulargewicht (in g/mol) laut GPC, das 2000 übersteigt, vorzugsweise im Bereich von etwa 3000 bis etwa 20000 und bevorzugter im Bereich von etwa 4000 bis etwa 10000 aufweisen. Die T_{g} des Acryl-Polymers variiert im Bereich von 0 °C bis etwa 100 °C, vorzugsweise im Bereich von etwa 10 °C bis etwa 80 °C.

Das zur Verwendung in der vorliegenden Erfindung geeignete Acryl-Polymer kann herkömmlicherweise aus typischen Monomeren, wie Alkyl-(meth)acrylaten mit Alkyl-Kohlenstoffatomen im Bereich von 1 bis 18, vorzugsweise im Bereich von 1 bis 12, und Styrol und funktionellen Monomeren, wie Hydroxyethylacrylat und Hydroxyethylmethacrylat, polymerisiert werden.

Der zur Verwendung in der vorliegenden Erfindung geeignete Polyester kann ein gewichtsmittleres Molekulargewicht laut GPC aufweisen, das 1500 übersteigt, vorzugsweise im Bereich von etwa 1500 bis etwa 100000, bevorzugter im Bereich von etwa 2000 bis etwa 50000, stärker bevorzugt im Bereich von etwa 2000 bis etwa 8000 und besonders bevorzugt im Bereich von etwa 2000 bis etwa 5000. Die T_{g} des Polyesters variiert im Bereich von etwa -50 °C bis etwa +100 °C, vorzugsweise im Bereich von etwa -20 °C bis etwa +50 °C

Der zur Verwendung geeignete Polyester kann in üblicher Weise aus geeigneten Polysäuren, einschließlich cycloaliphatischen Polycarbonsäuren, und geeigneten Polyolen, die mehrwertige Alkohole einschließen, polymerisiert werden. Beispiele für geeignete cycloaliphatische Polycarbonsäuren sind Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecandicarbonsäure, Endoethylenhexahydrophthalsäure, Camphersäure, Cyclohexantetracarbon- und Cyclobutantetracarbonsäure. Die cycloaliphatischen Polycarbonsäuren können nicht nur in deren cis-, sondern auch in deren trans-Form und als ein Gemisch von beiden Formen verwendet werden. Beispiele für geeignete Polycarbonsäuren, die, falls gewünscht, zusammen mit den cycloaliphatischen Polycarbonsäuren verwendet werden können, sind aromatische und aliphatische Polycarbonsäuren, wie zum Beispiel Phthalsäure, Isophthalsäure, Terephthalsäure, Halogenphthalsäuren, wie Tetrachlor- oder Tetrabromphthalsäure, Adipinsäure, Glutarsäure, Azelainsäure, Sebacinsäure, Fumarsäure, Maleinsäure, Trimellitsäure und Pyromellitsäure.

Geeignete mehrwertige Alkohole schließen Ethylenglycol, Propandiole, Butandiole, Hexandiole, Neopentylglycol, Diethylenglycol, Cyclohexandiol, Cyclohexandimethanol, Trimethylpentandiol, Ethylbutylpropandiol, Ditrimethylolpropan, Trimethylolethan, Trimethylolpropan, Glycerin, Pentärythrit, Dipentärythrit, Tris(hydroxyethyl)-isocyanat, Polyethylenglycol und Polypropylenglycol ein. Falls gewünscht, können auch einwertige Alkohole, wie zum Beispiel Butanol, Octanol, Laurylalkohol, ethoxylierte oder propoxylierte Phenole zusammen mit mehrwertigen Alkoholen eingeschlossen sein.

Die vernetzbare Komponente kann weiterhin ein oder mehrere reaktive Oligomere einschließen, wie nicht-alicyclische (lineare oder aromatische) Oligomere, offenbart in US 6 221 494 B4, Seite 3, Spalte 4, Zeile 1 bis Zeile 48, die hierin durch diesen Hinweis einbezogen sind. Solche nichtalicyclischen Oligomere können unter Verwendung nicht-alicyclischer Anhydride, wie Bernsteinsäure- oder Phthalsäureanhydride oder Gemische davon, hergestellt werden. Caprolacton-Oligomere, die in US 5 286 782 Seite 3, Spalte 4, Zeile 43 bis Spalte 5, Zeile 57 beschrieben sind, die hierin durch diesen Hinweis einbezogen sind, können ebenfalls verwendet werden.

Die vernetzbare Komponente der Beschichtungszusammensetzung kann weiterhin ein oder mehrere modifzierende Harze einschließen, die auch als nicht-wässrige Dispersionen (NADs) bekannt sind. Solche Harze werden manchmal verwendet, um die Viskosität der erhaltenen Beschichtungszusammensetzung einzustellen. Die Menge von modifizierendem Harz, die verwendet werden kann, liegt typischerweise in Bereichen von etwa 10 Gew.-% bis etwa 50 Gew.-%, wobei alle Prozentsätze auf dem Gesamtgewicht von vernetzbaren Komponenten-Feststoffen basieren. Das gewichtsmittlere Molekulargewicht (in g/mol) des modifizierenden Harzes, bestimmt nach DIN 55672:2016-03, liegt im Allgemeinen in Bereichen von etwa 20000 bis etwa 100000, vorzugsweise in Bereichen von etwa 25000 bis etwa 80000 und bevorzugter in Bereichen von etwa 30000 bis etwa 50000.

Die vernetzbare oder vernetzende Komponente der Beschichtungszusammensetzung der vorliegenden Erfindung enthält typischerweise mindestens ein organisches Lösungsmittel, das typischerweise aus der Gruppe, bestehend aus aromatischen Kohlenwasserstoffen, wie Erdölnaphtha oder Xylolen; Ketonen, wie Methylamylketon, Methylisobutylketon, Methylethylketon oder Aceton; Estern, wie Essigsäurebutylester oder Essigsäurehexylester; und Glycoletherestern, wie Propylenglycolmonomethyletheracetat, ausgewählt ist. Die Menge von zugegebenem organischem Lösungsmittel hängt von dem gewünschten Feststoffanteil sowie der gewünschten Menge an VOC der Zusammensetzung ab. Falls gewünscht, kann das organische Lösungsmittel zu beiden Komponenten des Bindemittels gegeben werden. Eine Beschichtungszusammensetzung mit hohem Feststoffgehalt und niedriger VOC ist bevorzugt.

Falls nachstehende Steuerungsmittel für eine niedrige Einbrenntemperatur mit entweder der vernetzbaren Komponente, der vernetzenden Komponente oder beiden der Beschichtungszusammensetzung (vorzugsweise mit der vernetzbaren Komponente) eingeschlossen sind, kann die Ablaufbeständigkeit der auf eine Substratoberfläche aufgetragenen Schicht verbessert werden, unter der Bedingung einer niedrigen Einbrenntemperatur. Das Steuerungsmittel für eine niedrige Einbrenntemperatur der vorliegenden Erfindung schließt eine Rheologie-Komponente ein. In einer beispielhaften Ausführungsform schließt die Rheologie-Komponente ein amorphes Kieselgel, einen Ton oder eine Kombination von beiden ein. In einer anderen beispielhaften Ausführungsform schließt das Steuerungsmittel für eine niedrige Einbrenntemperatur etwa 0,1 Gew.-% bis etwa 10 Gew.-%, vorzugsweise etwa 0,3 Gew.-% bis etwa 5 Gew.-%, bevorzugter etwa 0,5 Gew.-% bis etwa 2 Gew.-% der Rheologie-Komponente, und im Bereich von etwa 0,1 Gew.-% bis etwa 10 Gew.-%, vorzugsweise im Bereich von etwa 0,3 Gew.-% bis etwa 5 Gew.-% und bevorzugter im Bereich von etwa 0,5 Gew.-% bis etwa 2 Gew.-% von Polyharnstoff ein, wobei die Gew.-%sätze auf dem Gesamtgewicht der vernetzbaren und vernetzenden Komponenten der härtbaren Beschichtungszusammensetzung mit niedrigem Einbrennen der vorliegenden Erfindung basieren. Wenn zu wenig Kieselgel und Polyharnstoff verwendet werden (weniger als die vorstehend angeführten Bereiche), kann kein Vorteil ersichtlich werden und wenn zu viel Kieselgel und Polyharnstoff verwendet werden (mehr als die vorstehend angeführten Bereiche), wird die erhaltene Beschichtungs-Oberfläche rau.

Zur Verwendung geeignete amorphe Kieselgele schließen kolloidale Kieselgele, welche durch die Silanisierung von Hydroxylgruppen auf den Kieselgelteilchen teilweise oder vollständig oberflächenmodifiziert wurde, wodurch ein Teil oder alles von der Kieselgelteilchenoberfläche hydrophob wird, ein. Beispiele für geeignetes hydrophobes Kieselgel schließen ÄROSIL R972, ÄROSIL R812, ÄROSIL OK412, ÄROSIL TS-100 und ÄROSIL R805 ein, wobei alle von Evonik Industries AG, Essen, Deutschland, kommerziell erhältlich sind. Besonders bevorzugt ist pyrogenes Kieselgel von Evonik Industries AG, Essen, Deutschland, als ÄROSIL R 812 erhältlich. Anderes kommerziell erhältliches Kieselgel schliesst SIBELITE M3000 (Cristobalite), SIL-CO-SIL, gemahlenes Kieselgel, MIN-U-SIL, mikronisiertes Kieselgel ein, wobei alle von U.S. Kieselgel Company, Berkeley Springs, West Virginia, bezogen werden.

Das Kieselgel kann in dem Copolymer durch ein Vermahl-Verfahren unter Verwendung herkömmlicher Ausrüstung, wie Hochgeschwindigkeitsblattmischer, Kugelmühlen oder Sandmühlen, dispergiert werden. Vorzugsweise wird das Kieselgel gesondert in dem früher beschriebenen Acryl-Polymer dispergiert und dann kann die Dispersion zu der vernetzbaren Komponente der Beschichtungszusammensetzung gegeben werden.

Der zur Verwendung hierin geeignete Ton kann Ton, dispergierten Ton oder eine Kombination davon einschließen. Beispiele für kommerziell erhältliche Tonprodukte schließen Bentonit-Ton, erhältlich als BENTONE von Elementis Specialties, London, Grossbritannien, und GARAMITE-Ton, erhältlich von Southern Ton Products, Gonzales, TX, USA, unter entsprechend eingetragenen Handelsmarken, ein. BENTONE 34-Dispersion, beschrieben in US-Patent Nr. 8 357 456, und GARAMITE-Dispersion, beschrieben in US-Patent Nr. 8 227 544, und eine Kombination der zwei sind geeignet. Eine Kombination des Kieselgels und des Tons, wie der vorstehend erwähnte BENTONE, der GARAMITE oder Dispersionen davon, können auch verwendet werden.

Der zur Verwendung in dem Steuerungsmittel für eine niedrige Einbrenntemperatur geeignete Polyharnstoff wird aus der Polymerisation eines Monomergemisches erhalten, das etwa 0,5 bis etwa 3 Gew.-% der Amin-Monomere, etwa 0,5 bis etwa 3 Gew.-% der Isocyanat-Monomere, und etwa 94 bis etwa 99 Gew.-% eines moderierenden Polymers einschließt. Das Amin-Monomer ist aus der Gruppe, bestehend aus einem primären Amin, sekundären Amin, Ketimin, Aldimin oder einer Kombination davon, ausgewählt. Benzylamin ist bevorzugt. Das Isocyanat-Monomer ist aus der Gruppe, bestehend aus einem aliphatischen Polyisocyanat, cycloaliphatischen Polyisocyanat, aromatischen Polyisocyanat und einer Kombination davon, ausgewählt. Das bevorzugte Isocyanat-Monomer ist 1,6-Hexamethylendiisocyanat oder 1,5-Pentamethylendiisocyanat. Das moderierende Polymer kann eines oder mehrere von den vorstehend beschriebenen Polymeren sein. Die Acryl-Polymere oder Polyester sind bevorzugt.

Vorzugsweise wird der Polyharnstoff durch Vermischen von einem oder mehreren der moderierenden Polymere mit den Amin-Monomeren hergestellt und dann werden Isocyanat-Monomere über die Zeit unter Umgebungs-Bedingungen zugegeben.

Die Ablaufbeständigkeit von einer Schicht aus einem Pot-Mix bzw. Mischansatz, die sich aus Vermischen der vernetzbaren und vernetzenden Komponenten der vorliegenden Beschichtungszusammensetzung ergibt, wenn auf ein Substrat aufgetragen, liegt im Bereich von etwa 5 (127 Mikrometern) bis etwa 20 mils (508 Mikrometern), wenn mit dem ASTM-Test D4400-99 gemessen. Je höher die Zahl, umso höher wird die gewünschte Ablaufbeständigkeit sein.

Die Beschichtungszusammensetzung wird vorzugsweise als eine Zwei-Komponenten-Beschichtungszusammensetzung formuliert, wobei die vernetzbare Komponente in einem gesonderten Behälter von der vernetzenden Komponente gelagert wird, welche vermischt wird, um ein Pot-Mix bzw. einen Mischansatz kurz vor der Verwendung zu bilden.

Die Beschichtungszusammensetzung wird vorzugsweise als eine Kraftfahrzeug-OEM-Zusammensetzung oder als eine Kraftfahrzeug-Ausbesserungs-Zusammensetzung formuliert. Diese Zusammensetzungen können als ein Basislack oder als ein pigmentierter Einbeschichtungs-Decklack auf ein Substrat aufgetragen werden. Diese Zusammensetzungen erfordern das Vorliegen von Pigmenten. Typischerweise wird ein Pigment-zu-Bindemittel-Verhältnis von etwa 1,0/100 bis etwa 200/100 in Abhängigkeit von der Farbe und Art von angewendetem Pigment verwendet. Die Pigmente werden in Mahlgüter durch herkömmliche Verfahren, wie Vermahlen, Sand-Vermahlen und Hochgeschwindigkeits-Vermischen, formuliert. Im Allgemeinen umfasst das Mahlgut Pigment und ein Dispergiermittel in einem organischen Lösungsmittel. Das Mahlgut wird in einer geeigneten Menge zu der Beschichtungszusammensetzung unter Vermischen gegeben, um eine pigmentierte Beschichtungszusammensetzung zu bilden.

Ein beliebiges der üblicherweise verwendeten organischen und anorganischen Pigmente, wie weiße Pigmente, zum Beispiel Titandioxid, Farbpigmente, metallische Schuppen, zum Beispiel Aluminium-Schuppen, spezielle Effektpigmente, zum Beispiel beschichtete Glimmer-Schuppen und beschichtete Aluminium-Schuppen, und Extender-Pigmente, kann verwendet werden.

Die Beschichtungszusammensetzung kann auch andere herkömmliche Formulierungszusätze, wie Netzmittel, Verlaufsmittel und Fliess-Steuerungsmittel, zum Beispiel Resiflow S (Polybutylacrylat), BYK 320 und 325 (Polyacrylate mit hohem Molekulargewicht), BYK 347 (Polyether-modifiziertes Siloxan), Entschäumer, Tenside und Emulgatoren, um die Zusammensetzung beim Stabilisieren zu unterstützen, einschließen. Andere Zusätze, die in der Regel die Beschädigungs-Beständigkeit verbessern, können zugegeben werden, wie Silsesquioxane und andere Silicat-basierende Mikropartikel.

Zum Verbessern der Witterungsbeständigkeit des Clear-Finish der Beschichtungszusammensetzung können etwa 0,1 % bis etwa 5 Gew.- %, basierend auf dem Gewicht der Zusammensetzungs-Feststoffe, von einem Ultraviolettlicht-Stabilisator oder einer Kombination von Ultraviolettlicht-Stabilisatoren und Absorptionsmittel zugegeben werden. Diese Stabilisatoren schließen Ultraviolettlicht-Absorptionsmittel, Screener, Quencher und spezielle gehinderte Amin-LichtStabilisatoren ein. Ebenfalls können etwa 0,1 % bis etwa 5 Gew.- %, basierend auf dem Gewicht der Zusammensetzungs-Feststoffe, von einem Antioxidans auch zugegeben werden.

Die Beschichtungszusammensetzung wird vorzugsweise in Form einer Zwei-Komponenten-Beschichtungszusammensetzung formuliert. Die vorliegende Erfindung ist besonders als ein Basislack für Freilandgegenstände, wie Fahrzeuge und andere Fahrzeugkarosserieteile, verwendbar. Das Fahrzeug oder das andere Fahrzeugkarosserieteil kann aus einem oder mehreren Werkstoffen aufgebaut sein. Geeignete Werkstoffe sind beispielsweise Metall, Kunststoff oder deren Mischungen. Das Fahrzeug kann jedes dem Fachmann bekannte Fahrzeug sein. Beispielsweise kann es sich bei dem Fahrzeug um ein Kraftfahrzeug, Lastkraftfahrzeug, Motorrad, Motorroller, Fahrrad oder ähnliches handeln. Bevorzugt handelt es sich bei dem Fahrzeug um ein Kraftfahrzeug und/oder Lastkraftfahrzeug (LKW-Fahrzeug), besonders bevorzugt handelt es sich um ein Kraftfahrzeug. Eine typische Kraftfahrzeug- oder LKW-Karosserie wird aus einem Stahlblech oder einem Kunststoff- oder einem Verbundwerkstoff-Substrat hergestellt. Zum Beispiel können die Schutzbleche aus Kunststoff- oder einem Verbundwerkstoff und der Hauptteil der Karosserie aus Stahl sein. Wenn Stahl verwendet wird, wird es zuerst mit einer anorganischen Rostschutz-Verbindung, wie Zink- oder Eisenphosphat, eine E-Beschichtung genannt, behandelt und dann wird eine Grundierungs-Beschichtung im Allgemeinen durch Elektroabscheidung aufgetragen. Typischerweise sind diese Elektroabscheidungs-Grundierungen epoxy-modifizierte Harze, vernetzt mit einem Polyisocyanat und werden durch ein kathodisches ElektroabscheidungsVerfahren aufgetragen. Gegebenenfalls kann eine Grundierung über die elektroabgeschiedene Grundierung, gewöhnlich durch Sprühen, aufgetragen werden, um besseres Aussehen und/oder verbesserte Anhaftung einer Basis-Lackierung oder einer Monobeschichtung an der Grundierung bereitzustellen.

Die bekannten Basislackformulierungen können sowohl lösemittelhaltig als auch wässrig eingesetzt werden.

Die Basislackschicht kann im Wesentlichen frei von Melamin und seinen Derivaten sein. Im Wesentlichen frei bedeutet in diesem Zusammenhang insbesondere, dass Melamin und seine Derivate in der Basislackschicht in Mengen von weniger als 5 Gew.-%, bevorzugt weniger als 3 Gew.-%, besonders bevorzugt weniger als 1 Gew.-%, bezogen auf das Gesamtgewicht der nichtflüchtigen Komponenten der Basislackschicht, vorhanden sind. In diesen Mengen in der Basislackschicht vorhandenes Melamin oder dessen Derivate leisten beim Aushärten unter Wärmezufuhr keinen wesentlichen Beitrag zur Vernetzung der Basislackschicht.

Gemäß einer bevorzugten Ausführungsform der Erfindung ist die Basislackschicht im Wesentlichen frei von Melamin und seinen Derivaten.

In Ausführungsformen, bei denen es z.B. auf eine weitere Verbesserung der Zwischenschichthaftung und einen noch höheren Vernetzungsgrad der Basislackschicht ankommt, hat es sich als vorteilhaft erwiesen, wenn die erfindungsgemäße Basislackschicht mindestens eine NCO-reaktive Verbindung umfasst. Für die Basislackschicht geeignete NCO-reaktive Verbindungen sind Polyetherpolyole, Polycarbonatpolyole, Polyesterpolyole, Polyacrylatpolyole, Polyurethanpolyole, Polyacrylatpolyole, wie sie weiter oben bereits für die Klarlackschicht beschrieben wurden. Bevorzugt wird als NCO-reaktive Verbindung in der Basislackschicht eine oder mehrere ausgewählt aus Polyesterpolyolen, Polyacrylatpolyolen und/oder Polyurethanpolyolen eingesetzt.

Die Basislackschicht kann mindestens eine NCO-reaktive Verbindung umfassen.

Der Basislack kann ein Einkomponentenlack sein und keine Topfzeit aufweisen. Keine Topfzeit bedeutet in diesem Zusammenhang, dass der applikationsfertige Basislack für mehr als 7 Tage, bevorzugt mehr als 2 Wochen, besonders bevorzugt mehr als 4 Wochen lagerstabil ist, also auch nach 7 Tagen, 2 Wochen bzw. 4 Wochen mit gleichen Eigenschaften, wie frisch hergestellt, verwendet werden kann.

Die erfindungsgemäße Decklackschicht weist zu größer oder gleich 40 Gew.-% und kleiner oder gleich 100 Gew.-% silangruppen-enthaltende Prepolymere und/oder deren Vernetzungsprodukte auf. Die Gewichts-%-Angabe bezieht sich dabei auf die getrocknete und gehärtete Decklackschicht. Die verwendeten Prepolymere können dabei eine oder mehrere Silangruppen pro Prepolymer aufweisen. Die Prepolymere weisen also mindestens eine funktionelle Gruppe aus einem Silicium-Grundgerüst und Wasserstoff auf. Diese funktionelle Gruppe kann beispielsweise - SiH₃ sein. Die Wasserstoffe können noch durch weitere Gruppen, beispielsweise alkyl oder alkoxyGruppen substituiert sein. Die silangruppen-enthaltenden Prepolymere können dabei als solche oder in Form höhermolekularer Vernetzungsprodukte, beispielsweise als Funktion einer speziellen Vernetzung oder Härtung, vorliegen. Der Vernetzungsgrad und damit verbunden die unterschiedlichen Anteile an Monomeren und höhermolekularen Polymeren ist dabei eine Funktion der Reaktionsbedingungen, der Zusammensetzung der Decklackschicht und der vorliegenden Monomere. In bevorzugten Ausführungsformen kann der Anteil der silangruppen-enthaltende Prepolymere größer oder gleich 50 Gew.-% und kleiner oder gleich 100 Gew.-% und des Weiteren bevorzugt größer oder gleich 75 Gew.-% und kleiner oder gleich 100 Gew.-% betragen. Die Silangruppen der silangruppen-enthaltenden Prepolymere sind die vernetzungsbildenden Gruppe, d.h. sie reagieren unter Bildung einer Siloxangruppe.

Im Folgenden wird der Aufbau der erfindungsgemäß in der Decklackschicht einsetzbaren silanfunktionellen Prepolymere und der daraus möglicherweise entstehenden polymeren Vernetzungsprodukte beschreiben.

Ein silanfunktionalisiertes, polymeres Polyisocyanat mit mindestens einer Alkoxysilangruppe kann bereitgestellt werden als ein im Rahmen einer weiteren Ausführungsform erfindungsgemäß bevorzugtes silanfunktionelles Prepolymer. Besagte silanfunktionalisierte, polymere Polyisocyanate können durch die direkte Umsetzung von polymeren Polyisocyanaten mit Alkoxysilanen, die eine isocyanatreaktive Gruppe wie Amino, Mercapto oder Hydroxy tragen, synthetisiert werden. Als geeignete polymere Polyisocyanate finden aromatische, araliphatische, aliphatische oder cycloaliphatische polymere Polyisocyanate mit einer NCO-Funktionalität ≥ 2 Verwendung. Diese können auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen und lassen sich nach den üblichen Verfahren herstellen.

Geeignete Diisocyanate zur Herstellung der polymeren Polyisocyanate sind beliebige der oben genannten geeigneten und bevorzugt genannten Diisocyanate oder beliebige Mischungen dieser Diisocyanate. Ganz besonders bevorzugt eignen sich zur Darstellung der besagten silanfunktionellen polymeren Polyisocyanate Dimere aus den vorgenannten Diisocyanaten, Trimere aus den vorgenannten Diisocyanaten oder Kombinationen daraus als erfindungsgemäßes polymeres Polyisocyanat.

In einer weiteren Ausführungsform ist das silanfunktionelle Prepolymer ein silanfunktionelles Prepolymer, erhältlich durch die Umsetzung eines Isocyanatosilans mit einem Polymer, welches gegenüber Isocyanatgruppen reaktive funktionelle Endgruppen, insbesondere Hydroxylgruppen, Mercaptogruppen und/oder Aminogruppen, aufweist.

Bei den Alkoxysilan-funktionellen Isocyanaten handelt es sich um beliebige Verbindungen, in denen gleichzeitig nebeneinander mindestens eine, vorzugsweise genau eine, Isocyanatgruppe und mindestens eine, vorzugsweise genau eine, Silangruppe mit mindestens einem Alkoxysubstituenten vorliegen. Im Folgenden wird das Alkoxysilan-funktionelle Isocyanat auch als Isocyanatoalkoxysilan bezeichnet.

Geeignete Isocyanatoalkoxysilane sind beispielsweise Isocyanatoalkylalkoxysilane, wie sie z. B. nach den in US 3 494 951, EP-A 0 649 850, WO 2014/063895 und WO 2016/010900 beschriebenen Verfahren auf phosgenfreiem Weg durch thermische Spaltung der korrespondierenden Carbamate oder Harnstoffe zugänglich sind.

Bevorzugte Polymere, die gegenüber Isocyanatgruppen reaktive funktionelle Endgruppen enthalten, sind die oben genannten polymeren Polyole, ganz besonders Polyether-, Polyester-, Polycarbonat- und Polyacrylatpolyole sowie Polyurethanpolyole, hergestellt aus Polyisocyanaten und den genannten Polyolen. Es können auch Mischungen aller genannten Polyole verwendet werden.

Gemäß einer weiteren bevorzugten Ausführungsform kommt als Alkoxysilan-funktionelles Isocyanat mindestens eine Verbindung der allgemeinen Formel 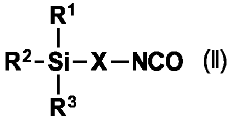 zum Einsatz,
in welcher
R¹, R² und R³ unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist, und
X für einen linearen oder verzweigten organischen Rest mit bis zu 6, vorzugsweise 1 bis 4 Kohlenstoffatomen, besonders bevorzugt für einen Propylenrest (-CH2-CH2-CH2-) steht.

Beispiele für derartige Isocyanatoalkoxysilane sind Isocyanatomethyltrimethoxysilan, Isocyanatomethyltriethoxysilan, Isocyanatomethyltriisopropoxysilan, 2-Isocyanatoethyl-trimethoxysilan, 2-Isocyanatoethyltriethoxysilan, 2-Isocyanatoethyltriisopropoxysilan, 3-Isocyanatopropyltrimethoxysilan, 3-Isocyanatopropyltriethoxysilan, 3-Isocyanatopropylmethyldimethoxysilan, 3-Isocyanatopropylmethyldiethoxysilan, 3-Isocyanatopropylethyldiethoxysilan, 3-Isocyanatopropyldimethylethoxysilan, 3-Isocyanatopropyldiisopropylethoxysilan, 3-Isocyanatopropyltripropoxysilan, 3-Isocyanatopropyltriisopropoxysilan, 3-Isocyanatopropyltributoxysilan, 3-Isocyanatopropylmethyldibutoxysilan, 3-Isocyanatopropylphenyldimethoxysilan, 3-Isocyanatopropylphenyldiethoxysilan, 3-Isocyanatopropyltris(methoxyethoxyethoxy)silan, 2-Isocyanatoisopropyltrimethoxysilan, 4-Isocyanatobutyltrimethoxysilan, 4-Isocyanatobutyltriethoxysilan, 4-Isocyanatobutyltriisopropoxysilane, 4-Isocyanatobutylmethyldimethoxysilan, 4-Isocyanatobutylmethyldiethoxysilan, 4-Isocyanatobutylethyldimethoxysilan, 4-Isocyanatobutylethyldiethoxysilan, 4-Isocyanatobutyldimethylmethoxysilan, 4-Isocyanatobutylphenyldimethoxysilan, 4-Isocyanatobutylphenyldiethoxysilan, 4-Isocyanato(3-methylbutyl)trimethoxysilan, 4-Isocyanato(3-methylbutyl)triethoxysilan, 4-Isocyanato(3-methylbutyl)methyldimethoxysilan, 4-Isocyanato(3-methylbutyl)methyldiethoxysilan und 11-Isocyanatoundecyltrimethoxysilan oder beliebige Gemische solcher Isocyanatoalkoxysilane.

Geeignete Isocyanatoalkoxysilane sind beispielsweise auch Isocyanatosilane mit Thiourethanstruktur, wie sie nach dem Verfahren der WO 2014/037279 durch Umsetzung beliebiger aliphatischer, cycloaliphatischer, araliphatischer oder aromatischer Diisocyanate mit beliebigen Mercaptosilanen in einem NCO : SH-Verhältnis von 6 : 1 bis 40 : 1 und anschließende Abtrennung überschüssiger, nicht umgesetzter monomerer Diisocyanate durch Dünnschichtdestillation erhalten werden können.

Gemäß einer weiteren bevorzugten Ausführungsform kommt als Isocyanatoalkoxysilan mindestens eine Verbindung nach der allgemeinen Formel zum Einsatz 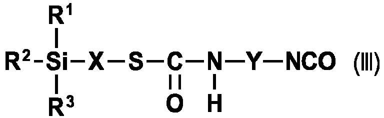 die im Gemisch mit untergeordneten Mengen des entsprechenden Bis-Addukts, bei dem beide Isocyanatgruppen des Diisocyanats mit dem Mercaptosilan umgesetzt sind, vorliegen, wobei in Formel (III) und dem Bis-Addukt
- R¹, R² und R³: unabhängig voneinander für gleiche oder verschiedene gesättigte oder ungesättigte, lineare oder verzweigte, aliphatische oder cycloaliphatische oder gegebenenfalls sub-stituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist,
- X: für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht und
- Y: für einen linearen, verzweigten, oder cyclischen organischen Rest steht. Dies kann ein aromatischer oder aliphatischer Rest sein, bevorzugt eine Einheit oder ein Gemisch ausgewählt aus der Gruppe bestehend aus Isophoronyl, Pentamethylen, Hexamethylen, Biscylohexylmethylen, Toluidenyl oder Methylendiphenylen.

Die Isocyanatosilane der Formel (III) lassen sich bevorzugt mit Polyolen zu silangruppen-enthaltenden Prepolymeren nach der allgemeinen Formel 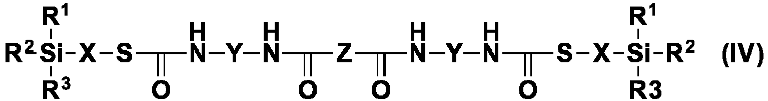 umsetzen, wobei in der Formel (IV)
R¹, R² und R³ unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist,
- X: für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht und
- Y: für einen linearen, verzweigten, oder cyclischen organischen Rest steht. Dies kann ein aromatischer oder aliphatischer Rest sein, bevorzugt eine Einheit oder ein Gemisch ausgesucht aus der Gruppe bestehend aus Isophoronyl, Pentamethylen, Hexamethylen, Biscylohexylmethylen, Toluidenyl oder Methylendiphenylen,
- Z: für eine Struktureinheit steht, die von einem mindestens difunktionellen Polyol abgeleitet ist, das ein zahlenmittleres Molekulargewicht Mₙ von 270 bis 22000 g/mol, bevorzugt von 500 bis 18000 g/mol und besonders bevorzugt von 800 bis 12000 g/mol aufweist. Bevorzugt weist das Polyol zusätzlich eine nach DIN EN ISO 2114:2002-06 bestimmte Säurezahl von 0,01 bis 30,0 mg KOH/g, bevorzugt 0,1 bis 25,0 mg KOH/g, besonders bevorzugt 0,2 bis 20,0 mg KOH/g, jeweils bezogen auf den Feststoffgehalt des Polyols, auf. Besonders bevorzugt ist das Polyol ein Polyesterpolyol, Polycarbonatpolyol und/oder Polyacrylatpolyol, vorzugsweise mit einer mittleren OH-Funktionalität von 2 bis 6 und besonders bevorzugt von 2 bis 4.

Geeignete und bevorzugte Polyole von denen sich die Struktureinheit Z in der Formel (IV) ableitet, sind die bereits oben im Text beschriebenen (polymeren) Polyole, wobei die gleichen Bevorzugungen gelten. Solche geeigneten und bevorzugten Polyole und daraus erhaltene silanfunktionelle Prepolymere sind die in der WO 2018/029197 offenbarten Verbindungen, die sich vorzugsweise nach den dort beschriebenen Verfahren herstellen lassen.

Alternativ oder in Kombination zur vorstehenden Definition von Z in der Formel (IV) steht Z nach einer weiteren Ausführungsform des erfindungsgemäßen Verfahrens für eine Struktureinheit, die von einem mehrwertigen Alkohol und/oder Ether- oder Esteralkohol als Polyol abgeleitet ist, der 2 bis 14 Kohlenstoffatome, bevorzugt 4 bis 10 Kohlenstoffatome enthält.

Alternativ oder in Kombination zur vorstehenden Definition von Z in der Formel (IV)geeignete solcher auch als niedermolekular bezeichneter Polyole sind mehrwertige Alkohole und/oder Ether- oder Esteralkohole wie beispielsweise 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2, 6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, Bis (hydroxymethyl)-tricyclo[5.2.1.0^{2'6}]-decan, 4,8-Bis(hydroxymethyl)tricyclo-[5.2.1.0^{2,6}]-decan and 5,8-Bis(hydroxymethyl)-tricyclo-[5.2.1.0'] enthaltend Jdecan, wobei die Verbindungen einzelnen oder in einem Isomerengemisch vorliegen können., Di-Trimethylolpropan, 2,2-Bis(hydroxymethyl)-1,3-propandiol (Pentaerythrit), 2,2,6,6-Tetrakis(hydroxymethyl)-4-oxa-heptan-1, 7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsaureneopentylglykolester.

Bevorzugte Beispiele für solche Isocyanatosilane mit Thiourethanstruktur sind die Umsetzungsprodukte von 2-Mercaptoethyltrimethoxylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropylethyldimethoxysilan, 3-Mercaptopropylethyldiethoxysilan und/oder 4-Mercaptobutyltrimethoxysilan mit 1,5-Diisocyanatopentan, 1,6-Diisocyanatohexan, 1-Isocyanato-3,3,5-trimethyl-5-isocyanatomethylcyclohexan, 2,4`- und/oder 4,4`-Diisocyanatodicyclohexylmethan oder beliebigen Gemischen dieser Diisocyanate.

Besonders bevorzugte Alkoxysilan-funktionelle Isocyanate für das erfindungsgemäße Verfahren sind Isocyanatomethyltrimethoxysilan, Isocyanatomethyltriethoxysilan, 3-Isocyanatopropyltrimethoxysilan und 3-Isocyanatopropyltriethoxysilan, die nach dem Verfahren der WO 2014/037279 durch Umsetzung von 3-Mercaptopropyltrimethoxysilan und/oder 3-Mercaptopropyltriethoxysilan mit 1,5-Diisocyanatopentan, 1,6-Diisocyanatohexan, 1-Isocyanato-3,3,5-trimethyl-5-isocyanatomethylcyclohexan, 2,4`- und/oder 4,4`-Diisocyanatodicyclohexylmethan erhältlichen Isocyanatosilane mit Thiourethanstruktur sowie beliebige Gemische solcher Isocyanatosilane.

Ganz besonders bevorzugt ist die Verwendung der genannten Isocyanatosilane mit Thiourethanstruktur.

Um die für die vorliegende Erfindung geeigneten silanfunktionellen Prepolymere zu erhalten, wird, wie beim in der WO 2018/029197 beschriebenen Verfahren, nach der Umsetzung, vorzugsweise im

Anschluss an die Umsetzung des mindestens einen oben beschriebenen polymeren Polyols oder niedermolekularem Polyol, oder einem Gemisch aus beiden, mit der mindestens einen oben, das erhaltene Reaktionsprodukt in einem weiteren Verfahrensschritt mit mindestens einem Alkoxysilan-funktionellen Isocyanat umgesetzt. Das erhaltene Reaktionsprodukt kann gegebenenfalls vor der Umsetzung mit dem Alkoxysilan-funktionellen Isocyanat noch weiteren beliebigen Zwischenschritten unterzogen werden, sofern bei der Umsetzung mit dem mindestens einen Alkoxysilan-funktionellen Isocyanat noch eine ausreichende Menge an Hydroxylgruppen im Reaktionsprodukt vorhanden ist. Besonders bevorzugt findet die Umsetzung des Reaktionsproduktes mit dem Alkoxysilan-funktionellen Isocyanat jedoch ohne Zwischenschritte statt.

Ebenfalls geeignete Isocyanatoalkoxysilane sind beispielsweise auch solche mit Formylharnstoffstruktur, wie sie nach dem Verfahren der WO 2015/113923 durch Umsetzung Formamidgruppen enthaltender Silane mit molar überschüssigen Mengen beliebiger aliphatischer, cycloaliphatischer, araliphatischer oder aromatischer Diisocyanate und anschließende destillative Abtrennung nicht umgesetzter monomerer Diisocyanate erhalten werden können.

Gemäß einer weiteren bevorzugten Ausführungsform kommt als Isocyanatoalkoxysilan mindestens eine Verbindung der allgemeinen Formel (V) zum Einsatz 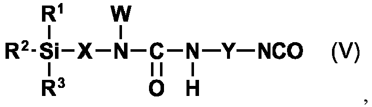 die im Gemisch mit untergeordneten Mengen silanfunktioneller Verbindungen der allgemeinen Formel (VI) 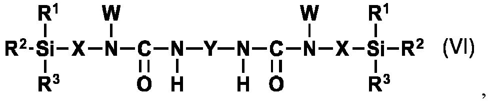 vorliegen, wobei in den Formeln (V) und (VI)
R¹, R² und R³ unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist,
- X: für einen linearen oder verzweigten organischen Rest mit bis zu 6, vorzugsweise 1 bis 4 Kohlenstoffatomen, besonders bevorzugt für einen Propylenrest (-CH2-CH2-CH2-) steht und
- Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen, bevorzugt für einen linearen oder verzweigten, aliphatischen oder cycloaliphatischen Rest mit 6 bis 13 Kohlenstoffatomen, steht und
- W: unabhängig voneinander für eine Formyl- oder Acetylgruppe oder auch eine COO-Gruppe mit einem Rest G steht. G kann dabei mono-, di-, tri- oder tetrafunktionell sein und steht für einen linearen oder verzweigten, aliphatischen oder cycloaliphatischen Rest oder eine davon abgeleitete, verbindende Einheit mit 4 bis 18 Kohlenstoffatomen oder einem gegebenenfalls substituierten aromatischen oder araliphatischen Rest oder eine davon abgeleitete, verbindende Einheit mit 6 bis 18 Kohlenstoffatomen, bevorzugt für einen linearen oder verzweigten, aliphatischen oder cyclolaliphatischen Rest mit 6 bis 13 Kohlenstoffatomen. Gegebenenfalls kann der Rest W ein oder mehrere Heteroatome ausgewählt aus der Gruppe Sauerstoff, Schwefel und Stickstoff enthalten.

Beispiele für solche Isocyanatosilane mit Formylharnstoffstruktur sind die Umsetzungsprodukte von Formamidsilanen, wie sie sich beispielsweise nach dem in WO 2015/113923 offenbarten Verfahren durch Umsetzung primäre Aminogruppen tragender Aminosilane, insbesondere 3-Aminopropyltrimethoxysilan und/oder 3-Aminopropyltriethoxysilan, mit Ameisensäurealkylestern, bevorzugt mit Methylformiat und/oder Ethylformiat, unter Alkoholabspaltung erhalten lassen, mit aliphatischen und/oder cycloaliphatischen Diisocyanaten, bevorzugt 1,5-Diisocyanatopentan, 1,6-Diisocyanatohexan, 1-Isocyanato-3,3,5-trimethyl-5-isocyanatomethylcyclohexan, 2,4`- und/oder 4,4`-Diisocyanatodicyclohexylmethan oder beliebigen Gemischen dieser Diisocyanate.

Weiterhin bevorzugt ist der Einsatz mindestens eines N-Formylaminoalkylsilans der Formel (IX) als isocyanatreaktive Alkoxysilankomponente zur Synthese Alkoxysilylgruppen-haltiger Prepolymere
worin R¹ eine mindestens divalente, gegebenenfalls substituierte, lineare oder verzweigte, aliphatische, alicyclische, araliphatische und/oder aromatische Struktureinheit mit 1 bis 12 Kohlenstoffatomen bedeutet, worin ein oder mehrere nicht benachbarte Methylengruppen durch O oder S ersetzt sein können,
R² und R³ stehen jeweils unabhängig voneinander für eine lineare oder verzweigte, aliphatische Gruppe mit 1 bis 12 Kohlenstoffatomen, die substituiert sein kann, und n steht für die Zahl 0, 1 oder 2. Bevorzugte Verbindungen der Formel (IX) werden ausgewählt aus N-(3-Triethoxysilylpropyl)formamid, N-(3-Methyldiethoxysilylpropyl)formamid, N-(3-Trimethoxysilylpropyl)formamid, N-(3-Methyldiethoxymethylsilylpropyl)formamid, oder Mischungen daraus. Entsprechende Verbindungen sowie daraus resultierende Alkoxysilylgruppenhaltige Prepolymere werden in der Druckschrift US 2016/340372 A1 offenbart, auf die ausdrücklich und vollinhaltlich bezuggenommen wird.

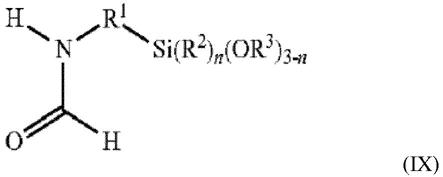

Weitere geeignete Isocyanatoalkoxysilane sind auch die beispielsweise nach dem Verfahren der EP-A 1 136 495 hergestellten 1:1-Monoaddukte aus Diisocyanaten und speziellen sekundären Aminoalkylalkoxysilanen, den aus der EP-A 0 596 360 bekannten, durch Umsetzung von Maleinsäuredialkylestern mit Aminosilanen erhältlichen Asparaginsäureestern, bei dem die Reaktionspartner unter Verwendung eines großen molaren Isocyanatüberschusses miteinander umgesetzt und im Anschluss die nicht umgesetzten monomeren Diisocyanate destillativ abgetrennt werden.

Des Weiteren werden als isocyanatreaktive Verbindungen bevorzugt Asparaginsäureester verwendet, wie sie in der EP-A-0 596 360 beschrieben werden. Bei diesen Molekülen der allgemeinen Formel (VIII) 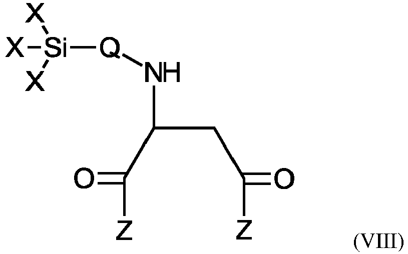 bedeutet X gleiche oder verschiedene Alkoxy- oder Alkylreste, die auch verbrückt sein können, wobei aber an jedem Si-Atom mindestens ein Alkoxyrest vorhanden sein muss, Q ist ein difunktioneller linearer oder verzweigter aliphatischer Rest und Z steht für einen Alkoxyrest mit 1 bis 10 Kohlenstoffatomen. Die Verwendung von solchen Asparaginsäureestern ist bevorzugt. Beispiele für besonders bevorzugte Asparaginsäureester sind N-(3-Triethoxysilylpropyl)asparaginsäurediethylester, N-(3-Tri-methoxysilylpropyl)-asparaginsäurediethylester und N-(3-Dimethoxymethylsilylpropyl)-asparaginsäurediethylester. Ganz besonders bevorzugt ist die Verwendung von N-(3-Triethoxysilylpropyl)asparaginsäurediethylester. Entsprechende aus Verbindungen der Formel (VIII) hergestellte Prepolymere A) sind solche, wie sie in EP-A-0 994 117 beschrieben und hergestellt werden.

Die alkoxysilyl-funktionalisierten Prepolymere der Druckschrift EP 2 641 925 A und der Druckschrift DE 10 2012 204290 A sind im Rahmen dieser Erfindung jeweils ebenso bevorzugt geeignet.

Die silanfunktionalisierten Thioallophanate der Druckschrift WO 2015/189164 sind besonders bevorzugt verwendbare isocyanatfunktionelle Silane der Formel (VII) 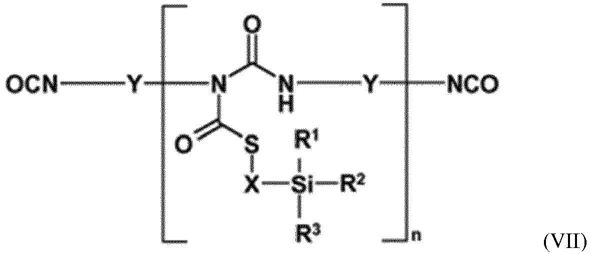 worin
R¹, R² und R³ unabhängig voneinander für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht,
Y einen linearen oder verzweigten, aliphatischen oder cycloaliphatischen, einen araliphatischen oder aromatischen Rest mit bis zu 18 Kohlenstoffatomen bedeutet und
n für eine ganze Zahl von 1 bis 20 steht.

Diese werden bevorzugt mit mindestens einem Polyol unter Erhalt eines silanfunktionellen Prepolymers umgesetzt. Als Polyole eignen sich die zuvor genannten Polyole bevorzugt (vide supra).

Die Umsetzung der Isocyanatosilane, wie beispielhaft in Formel (II), (III), (V) und (VII) dargestellt, mit den Isocyanat-reaktiven Gruppen, mit den vorzugsweise eingesetzten Polyolen erfolgt in derselben Weise, wie oben für die Herstellung des Isocyanat-haltigen Prepolymers aus der Polyisocyanatkomponente mit der Polyolkomponente beschrieben.

Geeignete und bevorzugte Polyole von denen sich die Struktureinheit Z in der Formel (IV) ableitet, sind die bereits oben im Text beschriebenen (polymeren) Polyole, wobei die gleichen Bevorzugungen gelten. Solche geeigneten und bevorzugten Polyole und daraus erhaltene silanfunktionelle Prepolymere sind die in der WO 2018/029197 offenbarten Verbindungen, die sich vorzugsweise nach den dort beschriebenen Verfahren herstellen lassen.

Alternativ oder in Kombination zur vorstehenden Definition von Z in der Formel (IV) steht Z nach einer weiteren Ausführungsform des erfindungsgemäßen Verfahrens für eine Struktureinheit, die von einem mehrwertigen Alkohol und/oder Ether- oder Esteralkohol als Polyol abgeleitet ist, der 2 bis 14 Kohlenstoffatome, bevorzugt 4 bis 10 Kohlenstoffatome enthält.

Alternativ oder in Kombination zur vorstehenden Definition von Z in der Formel (IV) sind geeignete, auch als niedermolekular bezeichnete Polyole, mehrwertige Alkohole und/oder Ether- oder Esteralkohole wie beispielsweise 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2, 6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, Bis (hydroxymethyl)-tricyclo[5.2.1.0^{2'6}]-decan, 4,8-Bis(hydroxymethyl)tricyclo-[5.2.1.0^{2,6}]-decan und 5,8-Bis(hydroxymethyl)-tricyclo-[5.2.1.0'] enthaltend Jdecan, wobei die Verbindungen einzelnen oder in einem Isomerengemisch vorliegen können., Di-Trimethylolpropan, 2,2-Bis(hydroxymethyl)-1,3-propandiol (Pentaerythrit), 2,2,6,6-Tetrakis(hydroxymethyl)-4-oxa-heptan-1, 7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsaureneopentylglykolester.

Bevorzugt wird die Umsetzung des Isocyanatosilans der Formel (V) zunächst mit einem monofunktionellen Alkohol wie Methanol, Ethanol, Propan-1-ol, Propan-2-ol, 1-Butanol, 2-Butanol 1-Pentanol, 1-Hexanol, 1-Heptanol, Ethyl-2-hexanol, 1-Octanol, 1-Nonanol und 1-Decanol. Die Umsetzung erfolgt zu mindestens 50 Gew.-% der NCO-Gruppen des Isocyanatosilans (V), besonders bevorzugt mit bis zu 60 Gew.-% und ganz besonders bevorzugt mit bis zu 70% des monofunktionellen Alkohols umgesetzt.

Das Verhältnis der NCO-Gruppen des Isocyanatosilans zu den Isocyanat-reaktiven Gruppen, vorzugsweise den Hydroxylgruppen der Polyole, beträgt zwischen 0,5 : 1 und 1 : 1, vorzugsweise zwischen 0,75 : 1 und 1: 1, ganz besonders bevorzugt zwischen 0,9 : 1 und 1 : 1.

Wie in den Patentschriften US 2017/0369626, US 2017/0369627 und US 2017/0369631 beschrieben können auch durch Umsetzung von Isocyantosilanen mit Amino-,Hydroxy- und Mercapto-funktionellen Bausteinen und anschließende Allophanatisierung mit einem Überschuss an zuvor beschriebenen Diisocyanaten Silangruppen-enthaltende Monoisocyanate dargestellt werden.

Als Isocyanatosilane bzw. isocyanatfunktionelle Alkoxysilanverbindungen sind grundsätzlich alle alkoxysilangruppenhaltigen Monoisocyanate mit einem Molekulargewicht von 145 g/mol bis 800 g/mol geeignet. Beispiele für solche Verbindungen sind Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanatopropyltrimethoxysilan, 3-Isocyanatopropylmethyldimethoxysilan, 3-Isocyanatopropyltriethoxysilan und 3-Isocyanatopropylmethyl-diethoxysilan. Bevorzugt ist hier die Verwendung von 3-Isocyanatopropyltrimethoxysilan oder 3-Isocyanatopropyltriethoxysilan, ganz besonders bevorzugt ist die Verwendung von 3-Isocyanatopropyltrimethoxysilan.

Es können aber auch isocyanatfunktionelle Alkoxysilanverbindungen mit höherem Molekulargewicht eingesetzt werden. Dabei ist es erfindungsgemäß möglich, isocyanatfunktionelle Silane zu verwenden, die durch Umsetzung eines Diisocyanates mit einem Amino- oder Thiosilan hergestellt wurden, wie sie in der US-A 4,146,585 oder der EP-A 1 136 495 beschrieben werden.

Geeignete Lösemittel sind insbesondere solche, die sich gegenüber den reaktiven Gruppen der Isocyanatosilane inert verhalten, beispielsweise die bekannten üblichen aprotischen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso, Isopar, Nappar (Deutsche EXXON CHEMICAL GmbH, Köln, DE) und Shellsol (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, Ethylethoxypropionat, Propylencarbonat, N-Methylpyrrolidon und N-Methylcaprolactam, oder beliebige Gemische solcher Lösemittel.

In einer weiteren Ausführungsform ist das silanfunktionelle Polymer ein silanfunktionelles Polymer, welches erhältlich ist durch eine Hydrosilylierungsreaktion von Polymeren mit endständigen Doppelbindungen, beispielsweise Poly(meth)acrylatpolymere und Polyetherpolymere, insbesondere von allylterminierten Polyoxyalkylenpolymeren, beschrieben beispielsweise in US 3,071,751 und US 6,207,766.

Bei allen genannten isocyanatreaktiven Silankomponenten sind, je nach gewünschtem Anwendungsgebiet, die Methoxyderivate und Ethoxysilanderivate für Anwendung im Korrosionsschutz und im Autoreparaturlackbereich bevorzugt.

Die erfindungsgemäß einsetzbaren Alkoxysilylgruppen-haltigen Prepolymere werden unter Einsatz isocyanatreaktiver Alkoxysilanverbindungen hergestellt, indem isocyanatfunktionelles Prepolymer (bevorzugt isocyanatfunktionelles Polyurethan oder polymere Polyisocyanate) durch Reaktion mit einer isocyanatreaktiven Alkoxysilanverbindung (insbesondere der vorgenannten bevorzugten isocyanatreaktiven alkoxysilanverbindungen) zum silanterminierten Prepolymer umgesetzt wird. Besagte Umsetzung mit isocyanatreaktiven Alkoxysilanen erfolgt innerhalb eines Temperaturbereiches von 0 °C bis 150 °C, vorzugsweise von 20 °C bis 120 °C, wobei die Mengenverhältnisse in der Regel so gewählt werden, dass pro Mol eingesetzter NCO-Gruppen 0,8 bis 1,3 Mol der isocyanatreaktiven Alkoxysilanverbindung eingesetzt werden, vorzugsweise 1,0 Mol isocyanatreaktive Alkoxysilanverbindung pro Mol eingesetzter NCO-Gruppen.

Neben den strukturgebenden Komponenten des Basislacks kann dieser auch zu größer oder gleich 0,5 Gew.-% und kleiner oder gleich 15 Gew.-% silangruppen-enthaltende Prepolymere und/oder deren Vernetzungsprodukte enthalten. Ohne durch die Theorie gebunden zu sein sind die silangruppen-enthaltende Prepolymere der Decklackschicht auch in der Lage in die Basislackschicht einzudiffundieren, welches zu den bevorzugten mechanischen Eigenschaften des Schichtverbundes führen kann. Die Menge an silangruppen-enthaltenden Prepolymeren in der Basislackschicht kann beispielsweise über ein quantitative EDX wie in den Beispielen beschreiben bestimmt oder klassisch über GPC bestimmt werden. Bevorzugt kann der Anteil an silangruppen-enthaltender Prepolymere (oder deren Vernetzungsprodukte) auch größer oder gleich 2 Gew.-% und kleiner oder gleich 9 Gew.-%, des Weiteren bevorzugt größer oder gleich 3 Gew.-% und kleiner oder gleich 8 Gew.-% betragen.

In einer bevorzugten Ausführungsform können die silangruppen-enthaltende Prepolymere und/oder deren Vernetzungsprodukte im Basislack einen Konzentrationsgradienten ausbilden. Dies bedeutet, dass die Konzentration dieser Komponenten in der Basislackschicht nicht konstant ist, sondern dass die Konzentration dieser Komponente an der unteren Grenze der Basislackschicht geringer ist und dann über die Basislackschicht zur Decklackschicht hin ansteigt. Diese Ausbildung kann zu einer besonders festen Haftung beider Schichten beitragen. Bevorzugt weist die Basislackschicht einen Unterschied in der Konzentration der silangruppen-enthaltende Prepolymere von unten nach oben von mindestens 25 mol-%, bevorzugt 50 mol-% und des Weiteren bevorzugt 75 mol-% auf. Der Gradient kann mittels quantitativer FTIR (nach DIN EN 16602-70-05:2014-02) an unterschiedlichen Schnitten durch die Basislackschicht bestimmt werden.

In einer bevorzugten Ausführungsform des Schichtverbundes können die silangruppen-enthaltenden Prepolymere oder ihre Vernetzungsprodukte ausgesucht sein aus der Gruppe bestehend aus Polyurethanen, polymeren Polyisocyanaten, Umsetzungsprodukte polymerer Polyole mit Silan-haltigen Verbindungen, Polyetherpolyolen, Polyesterpolyolen, Polycarbonatpolyolen, Polyacrylatpolyolen, Polymethacrylatpolyolen, Polyharnstoff, Polyurethanpolyole oder Mischungen daraus, wobei die einzelnen Prepolymere dieser Gruppendefinition jeweils mindestens eine Alkoxysilangruppe tragen. Insbesondere die über Alkoxysilan-Einheiten verfügenden Prepolymere der oben genannten Gruppe können zu einer besonders effizienten Diffusion der vernetzten oder unvernetzten Prepolymere in die Basislackschicht betragen. Darüber können mechanisch sehr stabile Schichtverbünde mit einer ausgezeichneten Witterungsstabilität resultieren. Weitere Eigenschaften dieser bevorzugten Prepolymerklassen sind u.a. weiter oben angeführt.

In einer bevorzugten Ausführungsform können die silangruppen- enthaltenden Vernetzungsprodukte Urethan Strukturen aufweisen. Insbesondere der Aufbau dieser Schichten aus silangruppen- enthaltenden Vernetzungsprodukte mit Urethan-Strukturen kann zu besonders festen haftenden Schichten mit guten optischen Eigenschaften und guter Beständigkeit beitragen.

Im erfindungsgemäßen Schichtverbund weisen die silangruppen-enthaltenden Prepolymere und/oder deren Vernetzungsprodukte mindestens eine Thiourethan- und/oder Urethaneinheit im Molekül auf. Diese silan-terminierten Prepolymere können beispielsweise durch Umsetzung von isocyanat-funktionellen Silanen und Thiourethanstruktur erhalten werden und verfügen über wenigstens eine über mindestens zwei Urethangruppen chemisch gebundene einfache Alkohol-, Polyether, Polyester-, Polycarbonat- Polyurethan- und/oder Polyacrylatstruktureinheiten. Bevorzugt über wenigstens eine über mindestens zwei Urethangruppen chemisch gebundene Polyacrylatstruktureinheiten. Diese silangruppen-enthaltende Prepolymere können zu besonders vorteilhaften mechanischen Eigenschaften des Schichtverbundes beitragen. Ohne durch die Theorie gebunden zu sein kann dies auf die Wechselwirkungen der Thiourethaneinheiten mit den Polymeren der Basislackschicht begründet sein.

Im Rahmen eines weiteren Aspektes des Schichtverbunds können die silangruppen-enthaltenden Prepolymere und/oder deren Vernetzungsprodukte ausgesucht sein aus der Gruppe bestehend aus Umsetzungsprodukten von Isocyanatgruppen tragenden, silanfunktionellen Verbindungen mit niedermolekularen Alkoholen, Polyacrylatpolyole, Polyesterpolyole, Polysiloxanpolyole oder Mischungen daraus. Gerade diese Gruppe an silangruppen-enthaltende Prepolymere kann zu einer besonders effizienten Diffusion in die oben beanspruchte Gruppe an Basislackschichten in der Lage sein. Dadurch können Schichtverbünde erhalten werden, welche besonders bevorzugte optische Eigenschaften, wie Transparenz, aufweisen und diese silangruppen-enthaltende Prepolymere können zu einer besonders guten Witterungsbeständigkeit des Verbundes führen.

Im Rahmen eines weiteren bevorzugten Aspektes des Schichtverbunds weisen die silangruppen-enthaltenden Prepolymere und/oder deren Vernetzungsprodukte, zu deren Herstellung Isocyanatfunktionalitäten eingesetzt werden, einen NCO-Restgehalt bestimmt nach DIN EN ISO 11909:2007-05 von größer oder gleich 0,0005% und kleiner oder gleich 1% auf.

In einer bevorzugten Ausführungsform des Schichtverbunds kann die Decklackschicht Katalysatoren ausgewählt aus der Gruppe bestehend aus Phosphorsäure, Dibutylphosphat, Bis(ethylhexylphosphat), Dimethylphosphat, Methylphosphat, Trimethylphosphat, Phenylphosphonsäure, Phenylphosphinsäure, oder Mischungen daraus in einer Konzentration von größer oder gleich 0,25 Gew.-% und kleiner oder gleich 2,5 Gew.-%, bevorzugt größer oder gleich 0,25 Gew.-% und kleiner oder gleich 2 Gew.-%, bezogen auf die Decklackschicht umfassen. Die Möglichkeit zur gesteuerten Diffusion der silangruppen-enthaltende Prepolymere der Decklackschicht kann auch über die Auswahl an Katalysatoren der Decklackschicht erfolgen. Zur Ausbildung einer ausreichenden Diffusion der Prepolymere der Decklackschicht haben sich die oben angegebenen Katalysatoren als sehr geeignet erwiesen. Ohne durch die Theorie gebunden zu sein können diese Katalysatoren zur Ausbildung einer möglichst effizienten Vernetzung der Decklackschicht unter gleichzeitiger Ausbildung eines geeigneten Diffusionsgradienten der silangruppen-enthaltende Prepolymere in der Basislackschicht beitragen. Anscheinend ist die kinetische Steuerung der Vernetzungsreaktion der silangruppen-enthaltende Prepolymere in der Decklackschicht dergestalt, dass für einen hinreichend langen Zeitraum die silangruppen-enthaltende Prepolymere sehr gut in die Basislackschicht diffundieren können. Bevorzugt kann die Konzentration der Katalysatoren in der Decklackschicht größer oder gleich 0,25 Gew.-% und kleiner gleich 1,5 Gew.-% betragen. Die Konzentration der Katalysatoren kann dabei beispielsweise an einer aufgelösten Decklackschicht über HPLC erfolgen. Kleinere Konzentrationen können nachteilig sein, da die Schichten dann nur sehr langsam aushärten und/oder die erforderliche Schichthärte nicht erreichen. Höhere Konzentrationen können nachteilig sein, da die Schicht nicht im Gleichgewicht, sondern aufgrund einer zu hohen Reaktionsgeschwindigkeit inhomogen aushärtet.

In einem bevorzugten Aspekt des Schichtverbunds kann die obere Decklackschicht bei einer Schichtdicke von 50 µm auf einem weißen Basislack einen Delta-Lab-Wert in Bezug zum weißen Basislack von ΔL größer oder gleich 0,2 und kleiner oder gleich 20, von Δa größer oder gleich - 0,01 und kleiner oder gleich -20, und Δb größer oder gleich -0,01 und kleiner oder gleich -13 aufweisen, der entsprechend DIN EN ISO 1166-4:2012-06 bestimmt wurde. Mittels des erfindungsgemäßen Verfahrens lassen sich insbesondere auch klare Decklacke, also Klarlacke, erhalten, welche die optischen Eigenschaften, insbesondere die Farbe, von Basislackschichten, wenig oder gar nicht beeinträchtigen. Es können also sehr homogene und transparente Decklackschichten erhalten werden.

Im Rahmen einer bevorzugten Ausführungsform des Schichtverbunds kann der Schichtverbund eine Pendelhärte gemessen DIN EN ISO 1522:2000-09 von größer oder gleich 60 s und kleiner oder gleich 180 s aufweisen. Der erfindungsgemäße Schichtverbund zeigt besondere viskoelastische Eigenschaften. Insbesondere kann der erfindungsgemäße Aufbau dazu beitragen, dass hochelastische Schichtverbünde bereitgestellt werden, welche für den gesamten Schichtverbund zu geeigneten Gebrauchseigenschaften führen können. Die verbesserte Elastizität kann beispielsweise dazu beitragen, den Anteil an Lackplatzern auf Autokarosserien aufgrund mechanischer Belastungen, wie beispielsweise einem Steinschlag, zu verringern.

Innerhalb einer weiteren Charakteristik des Schichtverbundes kann die Basislackschicht einen Anteil von größer oder gleich 2,5% und kleiner oder gleich 30% des in der Decklackschicht eingesetzten Katalysators aufweisen. Zur Ausbildung eines mechanisch sehr belastbaren Schichtverbundes hat sich ebenfalls als vorteilhaft herausgestellt, dass nicht nur die silangruppen-enthaltende Prepolymere in die Basislackschicht eindiffundieren, sondern dass der Aufbau des Schichtverbundes so ausgestaltet wird, dass auch ein Anteil des in der Decklackschicht verwendeten Katalysators in die Basislackschicht eindiffundieren kann. Dies kann die Haftung beider Schichten aufeinander verbessern und zu besonders bevorzugten mechanischen Eigenschaften führen.

In einer weiteren Ausgestaltung des Schichtverbunds kann die Basislackschicht einen Anteil von größer oder gleich 1 Gew.-% Silizium und kleiner oder gleich 10 Gew.-% Silizium aufweisen. Es hat sich zudem für die Festigkeit und Witterungsbeständigkeit des Schichtverbundes als besonders vorteilhaft herausgestellt, wenn der Basislack einen Anteil an Silizium aufweist. Dies kann zudem die Haftung der Schichten aufeinander verbessern. Bevorzugt rührt dieser Anteil an Silizium von Verbindungen her, welche die Decklackschicht bilden und im Zuge der Herstellung in den Basislack eindiffundieren. Der Anteil an Silizium lässt sich, wie später gezeigt, beispielsweise über REM/EDX bestimmen (entsprechend DIN EN ISO/IEC 17025:2018-03).

Weiterhin erfindungsgemäß ist ein Verfahren zur Herstellung eines mindestens 2-schichtigen Lackaufbaus aus einer unteren Basislack- und einer darüber angeordneten oberen Decklackschicht auf einem Substrat, wobei das Verfahren zumindest die folgenden Schritte aufweist:
a) Aufbringen einer Basislackschicht umfassend Polymere ausgesucht aus der Gruppe bestehend aus Polyacrylaten, Polyurethanen, Polyetherpolyolen, Polycarbonatpolyolen, Polyesterpolyolen, Melaminharzen, Alkydharzen oder deren Mischungen auf ein Substrat;
b) zumindest teilweises Aushärten der Basislackschicht;
c) Aufbringen eines Decklacks auf die in Schritt b) zumindest teilweise ausgehärtete Basislackschicht, wobei der Decklack als strukturgebende Komponente silangruppen-enthaltende Prepolymere und/oder deren Vernetzungsprodukte enthält, wobei die silangruppen-enthaltenden Prepolymere und/oder deren Vernetzungsprodukte mindestens eine Thiourethan- und/oder Urethaneinheit im Molekül aufweisen, und wobei der ausgehärtete Decklack einem Si-Gehalt von größer oder gleich 2,0 und kleiner oder gleich 9,0 Gew.-% und einen Katalysatorgehalt von größer oder gleich 0,01 Gew.-% und kleiner oder gleich 5 Gew.-% aufweist, und wobei der Katalysator ausgewählt ist aus der Gruppe bestehend aus Protonen- oder Lewissäuren oder Mischungen daraus; und
d) zumindest teilweises Aushärten der Decklackschicht.

Überraschenderweise hat sich gezeigt, dass obiges Verfahren geeignet ist, eine ausreichende Diffusion der silangruppen-enthaltenden Prepolymere aus der Decklackschicht in die Basislackschicht hinein zu gewährleisten. Es erfolgt somit eine verbesserte Haftung zwischen beiden Schichten, welche zu verbesserten mechanischen Eigenschaften des Schichtverbundes führen kann. Dadurch können beispielsweise die mechanischen Eigenschaften, wie die Elastizität des Verbundes oder die Witterungsbeständigkeit, verbessert werden. Dies ist im hohen Maße überraschend, da normalerweise silangruppen-enthaltende Prepolymere stark substratabhängige Eigenschaftsprofile aufweisen und auf oben genannten Basislacken eigentlich nur schlecht haften. Dies im Gegensatz zu anderen Substraten wie beispielsweise Glas, auf denen die silangruppen-enthaltende Prepolymere eine vernünftige Haftung aufweisen. Des Weiteren scheint sich über oben genanntes Verfahren auch ein Gradient an silangruppen-enthaltenden Prepolymere in der Basislackschicht einzustellen, welches im Vergleich zu einer homogenen Einmischung der silangruppen-enthaltenden Prepolymere in die Formulierung der Basislackschicht strukturell zu anderen Ergebnissen führt. Eine homogene Einmischung der silangruppen-enthaltende Prepolymere als zusätzlich Komponente zur Basislackschicht ist demzufolge nicht erfindungsgemäß und liefert andere Schichtverbünde.

Erfindungsgemäß wird ein mindestens 2-schichtiger Lackaufbau hergestellt. Der erfindungsgemäße zwei-schichtige Aufbau kann als alleiniger Aufbau zu Modifizierung eines Substrates oder in Kombination mit weiteren Schichten verwendet werden. So ist es beispielsweise möglich, dass ausgehend vom Substrat neben der Basislackschicht noch weitere Lackschichten vorliegen. Die weiteren Lackschichten liegen dann unterhalb der Basislackschicht. Der erfindungsgemäße Lackschichtaufbau zeichnet sich also durch einen physikalischen Kontakt zwischen der erfindungsgemäßen Basislackschicht und der erfindungsgemäßen Decklackschicht aus. Oberhalb der Decklackschicht können zudem noch weitere Schichten angeordnet sein, welche unabhängig von der erfindungsgemäßen Decklackschicht nach deren Härtung aufgebracht werden können. Es ist also auch ein Sandwich aus dem erfindungsgemäßen Verbund im Sinne der Erfindung, welches im inneren die Kombination beider Schichten aufweist.

Der Schichtverbund weist zumindest eine untere Basislack- und eine darüber angeordnete obere Decklackschicht auf. Dies bedeutet, dass von der Substrat- zur Luftseite hin, sich der Basislack näher zum Substrat und die Decklackschicht sich näher zur Luft befinden. Die obere Decklackschicht kann dabei eine Klarlackschicht sein, dies bedeutet, dass die Decklackschicht transparent ist und die optischen Eigenschaften des Schichtverbundes über die optischen Eigenschaften der Basislackschicht bestimmt werden.

Der Verfahren umfasst im Schritt a) das Aufbringen einer Basislackschicht umfassend Polymere ausgesucht aus der Gruppe bestehend aus Polyacrylaten, Polyurethanen, Polyetherpolyolen, Polycarbonatpolyolen, Polyesterpolyolen, Melaminharzen, Alkydharzen oder deren Mischungen auf ein Substrat. Die Gruppe an möglichen Polymeren wurde schon weiter vorne in der Diskussion der erfindungsgemäßen Schichtverbünde abgehandelt. Das Aufbringen der Polymere kann dabei durch den Fachmann bekannte Verfahren wie beispielsweise Rakeln, Aufstreichen, Tauchen oder Aufsprühen erfolgen. Das Substrat kann natürlich vorstehend noch durch weitere Schritte vorbehandelt werden, Beispielsweise durch Glätten, Aufrauhen oder Reinigen der Oberfläche.

Im Schritt b) wird zumindest die Basislackschicht teilweise ausgehärtet. Die Aushärtung kann dabei rein physikalisch durch Entzug eines Lösungsmittels oder durch Reaktion der Polymere untereinander unter Ausbildung höhermolekularer Strukturen erfolgen. Der Basislack kann beispielsweise über nachstehendes Verfahren aufgebracht werden: Die vernetzbare Komponente der vorstehend beschriebenen Beschichtungszusammensetzung wird mit der vernetzenden Komponente der Beschichtungszusammensetzung vermischt, um ein Pot-Mix bzw. einen Mischansatz zu bilden. Im Allgemeinen werden die vernetzbare Komponente und die vernetzende Komponente kurz vor der Auftragung vermischt, um ein Pot-Mix bzw. einen Mischansatz zu bilden. Das Vermischen kann über eine herkömmliche Mischdüse oder gesondert in einem Behälter stattfinden.

Eine Schicht des Pot-Mix bzw. Mischansatzes wird im Allgemeinen mit einer Dicke im Bereich von etwa 15 Mikrometern bis etwa 200 Mikrometern auf ein Substrat, wie eine Kraftfahrzeugkarosserie oder eine Kraftfahrzeugkarosserie, aufgetragen, die mit einer E-Beschichtung vorbeschichtet wurde, gefolgt von einer Grundierung. Der vorangehende Auftragungsschritt kann durch Sprühen, elektrostatisches Sprühen, kommerziell geliefertes Roboter-Sprühsystem, Walzen-Beschichtung, Tauchen, Fluten oder Pinseln des Pot-Mix bzw. Mischansatzes über das Substrat aufgetragen werden. Die Schicht wird nach Auftragung abdunsten lassen, d. h. der Luft ausgesetzt, um den Lösungsmittelgehalt der Pot-Mix- bzw. Mischansatz-Schicht zu vermindern, damit eine "Strike-in"-beständige bzw. vermischungsfeste Schicht hergestellt wird. Der Zeitraum des Abdunstungs-Schritts liegt in Bereichen von etwa 5 bis etwa 15 Minuten. Dann kann eine Schicht einer Klarlack-Zusammensetzung mit einer Dicke im Bereich von etwa 15 Mikrometern bis etwa 200 Mikrometern durch das früher beschriebene Auftragungsmittel über die "Strike-in"-beständige bzw. vermischungsfeste Schicht aufgetragen werden, um ein Mehr-Schicht-System auf dem Substrat zu bilden.

In einer anderen Variante wird eine Schicht des Pot-Mix bzw. Mischansatzes im Allgemeinen mit einer Dicke im Bereich von etwa 15 Mikrometern bis etwa 200 Mikrometern auf ein Substrat, wie eine Kraftfahrzeugkarosserie oder eine Kraftfahrzeugkarosserie, die mit einer E-Beschichtung, gefolgt von einer Grundierung, oder einer Grundierung vorbeschichtet wurde, aufgetragen. Der vorangehende Auftragungsschritt kann durch Sprühen, elektrostatisches Sprühen, kommerziell geliefertes Roboter-Sprühsystem, Walzen-Beschichtung, Tauchen, Fluten oder Pinseln des Pot-Mix bzw. Mischansatzes über das Substrat aufgetragen werden. Die Schicht wird nach Auftragung abdunsten lassen, d. h. der Luft ausgesetzt, um den Lösungsmittelgehalt der Pot-Mix- bzw. Mischansatz-Schicht zu vermindern, damit eine Strike-in-beständige Schicht hergestellt wird. Der Zeitraum des Abdunstungs-Schritts liegt in Bereichen von etwa 5 bis etwa 15 Minuten.

Im Schritt c) erfolgt das Aufbringen eines Decklacks auf die in Schritt b) zumindest teilweise ausgehärtete Basislackschicht, wobei der Decklack als strukturgebende Komponente silangruppen-enthaltende Prepolymere und/oder deren Vernetzungsprodukte enthält, wobei der ausgehärtete Decklack einem Si-Gehalt von größer oder gleich 2,0 und kleiner oder gleich 9,0 Gew.-% und einen Katalysatorgehalt von größer oder gleich 0,01 Gew.-% und kleiner oder gleich 5 Gew.-% aufweist, und wobei der Katalysator ausgewählt ist aus der Gruppe bestehend aus Protonen- oder Lewissäuren oder Mischungen daraus. Das Aufbringen der Decklackschicht kann dabei nach denselben Verfahren wie für die Basislackschicht erfolgen. Die Schichtdicke der Decklackschicht kann dabei im Bereich von etwa 15 Mikrometern bis etwa 200 Mikrometern betragen. Die einsetzbaren silangruppen-enthaltende Prepolymere und die einsetzbare Gruppe an geeigneten Katalysatoren sind weiter oben beschrieben. Die Gehaltsbestimmung für die Katalysatoren kann beispielsweise über eine HPLC an der aufgelösten Schicht erfolgen. Die Bestimmung des Siliziumgehaltes kann elementaranalytisch beispielsweise über ED-RFX erfolgen. Bevorzugt kann der Siliziumgehalt in der Decklackschicht weiterhin 3 - 8 Gew.-% betragen. Dieser Gehalt kann zu sehr witterungsbeständigen Schichtverbünden führen.

Im Schritt d) wird die Decklackschicht zumindest teilweise ausgehärtet. Das Aushärten der Decklackschicht kann dabei über ein rein physikalisches Entfernen von Lösungsmitteln oder durch eine chemische Reaktion, Vernetzung, der silangruppen-enthaltende Prepolymere untereinander erfolgen. Im Rahmen der Reaktion verfestigt sich die Decklackschicht unter Ausbildung höhermolekularer Strukturen oder Aggregate.

Innerhalb einer bevorzugten Ausführungsform des Verfahrens kann der Basislack bei einer Temperatur von größer oder gleich 10 °C und kleiner oder gleich 80 °C zumindest teilweise getrocknet werden. Auch die Härte- oder Trocknungsbedingungen der Basislackschicht scheinen einen Einfluss auf die Diffusionsmöglichkeiten der silangruppen-enthaltenden Prepolymere der Decklackschicht aufzuweisen. Für eine ausreichende Diffusion hat sich oben angegebener Temperaturbereich für die Basislackschicht als bevorzugt erwiesen, da durch diese Trocknungsbedingungen anscheinend der Eindiffusion weniger Wiederstand entgegengesetzt wird als bei Trocknungen in einem höheren Temperaturbereich. Dies kann bevorzugt zu der Eindiffusion eines ausreichenden Anteils an silangruppen-enthaltenden Prepolymere beitragen.

In einem bevorzugten Aspekt des Verfahrens kann der Katalysator der Decklackschicht einen pKs-Wert von größer oder gleich -14,0 und kleiner oder gleich 6 aufweisen. Zum Erreichen einer besonders effizienten Diffusion innerhalb des gesamten Lackverbundes haben sich Säuren als Katalysatoren, und hier insbesondere Protonensäuren oben angegebener Säurestärke als besonders geeignet erwiesen. Das Gleichgewicht und damit auch die Katalysatorwirkung stellen sich hinreichend schnell ein, sodass eine effiziente Diffusion ermöglicht wird und sehr gleichmäßige Decklackschichten erhalten werden.

Im Rahmen einer bevorzugten Ausgestaltung des Verfahrens können die silangruppen-enthaltenden Prepolymere ein zahlenmittleres Molekulargewicht gemessen nach DIN EN ISO 55672-1:2016-03 von größer oder gleich 250 g/mol und kleiner oder gleich 40000 g/mol aufweisen. Gerade dieser Molekulargewichtsbereich der silangruppen-enthaltende Prepolymere kann zu einer besonders effizienten Diffusion der silangruppen-enthaltende Prepolymere in die darunterliegende Basislackschicht beitragen. Dadurch kann eine besonders stabile Haftung zwischen Basislackschicht und Decklackschicht erreicht werden. Bevorzugt kann das Molekulargewicht auch größer oder gleich 500 g/mol und kleiner oder gleich 30000 g/mol, des Weiteren bevorzugt größer oder gleich 750 g/mol und kleiner oder gleich 20000 g/mol betragen.

In einer weiteren Ausgestaltung des Verfahrens kann das zumindest teilweise Aushärten in Schritt d) in einem Temperaturbereich von größer oder gleich 10 °C und kleiner oder gleich 90 °C erfolgen. Die Schnelligkeit des Trocknungsprozesses der Decklackschicht kann einen besonderen Einfluss zur ausreichenden Diffusion der silangruppen-enthaltende Prepolymere aus der Decklackschicht in die Basislackschicht hinein zeigen. Es wurde gefunden, dass sich besonders günstige Ausgestaltungen mit einer hohen Elastizität des Schichtverbundes ergeben, wenn die Trocknung der Decklackschicht bei relativ moderaten Temperaturen durchgeführt wird. Dies kann zudem die Witterungsbeständigkeit des Schichtverbundes günstig beeinflussen.

Weiterhin erfindungsgemäß ist die Verwendung des erfindungsgemäßen Verfahrens zum Verkleben, Abdichten oder Beschichten eines Substrats aber auch die Verwendung des erfindungsgemäßen Schichtverbunds zum Verkleben, Abdichten oder Beschichten eines Substrats. Zu den Vorteilen der erfindungsgemäßen Verwendung wird explizit auf die Vorteile des erfindungsgemäßen Verfahrens und die Vorteile des erfindungsgemäßen Schichtverbundes verwiesen.

Des Weiteren erfindungsgemäß ist ein Fahrzeug oder ein Fahrzeugkarosserieteil aufweisend einen erfindungsgemäßen Schichtverbund. Das Fahrzeug oder das Fahrzeugkarosserieteil kann aus einem oder mehreren Werkstoffen aufgebaut sein. Geeignete Werkstoffe sind beispielsweise Metall, Kunststoff oder deren Mischungen. Das Fahrzeug kann jedes dem Fachmann bekannte Fahrzeug sein. Beispielsweise kann es sich bei dem Fahrzeug um ein Kraftfahrzeug, Lastkraftfahrzeug, Motorrad, Motorroller, Fahrrad oder ähnliches handeln. Der erfindungsgemäße Schichtverbund eignet sich insbesondere im Bereich der Fertigung von Automobil-Beschichtungen, da hier besonders die elastischen Eigenschaften und eine verbessere Witterungsbeständigkeit gefragt sind. Des Weiteren kann durch die hohe optische Transparenz der Decklackschicht der Farbeindruck einer Basislackschicht besonders gut erhalten werden. Bevorzugt handelt es sich bei dem Fahrzeug um ein Kraftfahrzeug und/oder Lastkraftfahrzeug (LKW-Fahrzeug), besonders bevorzugt handelt es sich um ein Kraftfahrzeug.

### Beispiele

Alle Prozentangaben beziehen sich, soweit nicht anders angegeben, auf das Gewicht.

Alle Versuche wurden, soweit nicht anders angegeben, bei 23 °C und 50% relativer Feuchtigkeit durchgeführt.

Die Bestimmung der NCO-Gehalte erfolgte titrimetrisch nach DIN EN ISO 11909:2007-05.

OH-Zahlen wurden titrimetrisch nach DIN 53240-2:2007-11, Säure-Zahlen nach DIN EN ISO 2114:2002-06 bestimmt. Die angegebenen OH-Gehalte wurden aus den analytisch ermittelten OH-Zahlen errechnet. Die angegebenen Werte beziehen sich jeweils auf das Gesamtgewicht der jeweiligen Zusammensetzung inklusive gegebenenfalls mitverwendeter Lösungsmittel.

Die Restmonomergehalte wurden nach DIN EN ISO 10283:2007-11 gaschromatographisch mit internem Standard gemessen.

Der Festkörpergehalt wurde nach DIN EN ISO 3251:2008-06 bestimmt.

Die Viskosität wurde bei 23 °C nach DIN EN ISO 3219/A:1994-10 ermittelt.

Die Bestimmung der Pendeldämpfung nach König erfolgte nach DIN EN ISO 1522:2007-04 auf Glasplatten. Die beschriebenen STP-Filme sind mit einem Rakel auf Glasplatten aufgezogen worden. Die Trockenfilmdicke betrug bei allen Filmen 35-40 µm.

Die Lösungsmittel- und Wasserbeständigkeiten wurden nach DIN EN ISO 4628-1:2016-07 ermittelt. Für den Test der Lösemittelbeständigkeiten wurden die Lösemittel Xylol (folgend auch als "Xy" abgekürzt), Methoxypropylacetat (folgend auch als "MPA" abgekürzt), Ethylacetat (folgend auch als "EA" abgekürzt) und Aceton (folgend auch als "Ac" abgekürzt) verwendet. Die Kontaktzeit betrug jeweils 5 min. Für die Messung der Wasserbeständigkeiten betrug die Kontaktzeit jeweils 24 h. Die Abmusterung wurde entsprechend der angeführten Norm durchgeführt. Die Prüffläche wird visuell und durch Verkratzung beurteilt, dabei wird folgende Klassifikation vorgenommen: 0 = Keine Veränderung feststellbar; 1 = Quellungsring, Oberfläche hart, nur sichtbare Veränderung; 2 = Quellungsring, geringe Erweichung; 3 = deutliche Erweichung (evtl. geringe Blasenbildung); 4 = Starke Erweichung (evtl. starke Blasenbildung), durchritzbar bis zum Untergrund; 5 = Beschichtung komplett zerstört ohne Fremdeinwirkung.

Die Grenzfläche zwischen der STP-Schicht und dem Basislack wurde mittels REM/EDX entsprechend DIN EN ISO/IEC 17025:2018-03 bestimmt.

### Verwendete Materialien

Vestanat EP-M 95 wurde von der Firma Evonik AG, Essen, bezogen und ohne weitere Aufreinigung oder Modifikation eingesetzt.

Die verwendeten Diisocyanate sind Produkte der Covestro Deutschland AG, Leverkusen, DE.

Dibutylzinndilaurat (DBTL) wurde von der Fa. TIB Chemicals, Mannheim, DE, bezogen.

Stabaxol I wurde von der Fa. Lanxess AG, Rhein Chemie, Mannheim, DE, bezogen.

Basislack (schwarz) Spies Hecker Permahyd Basislack 280 super tief schwarz. Verdünnung mit VE-Wasser (95%). Einbrennbedinungen: 80 °C, 10 min oder ca. 30 min Lufttrocknung.

Basislack (weiß) Spies Hecker, Mischlack 280 WB 801, weiß. Dieser Basislack kann zur Bestimmung der Delta-Lab-Werte verwendet werden.

Alle anderen kommerziell zugänglichen Chemikalien wurden von der Fa. Sigma-Aldrich, Taufkirchen, DE, bezogen.

### Polymere Polyole A)

### Polymeres Polyol A1)

70%ig in Butylacetat gelöstes Polyacrylatpolyol, hergestellt aus 6,3% Ethylacrylat, 0,7% Acrylsäure, 17,6% Isobornylacrylat, 21,1% Hydroxyethylmethacrylat, 7% Methacrylsäuremethylester, 14,3% Styrol. OH-Gehalt: 2.4- 2.7%; Säurezahl: 7 ± 1 mg; Viskosität (23 °C): 1200 ± 200 mPas; Festkörper: 70.0% ± 2.0%.

### Beispiel 1: Herstellung Isocyanatosilan 1

1340 g (8 mol) HDI wurden bei einer Temperatur von 70 °C unter trockenem Stickstoff mit 1240 g (1 mol) (3-Mercaptopropyl)triethoxysilan versetzt und nach Zugabe von 0,25 g (2,04 mmol) DABCO 2 h gerührt, bis ein NCO-Gehalt von 39,3%, entsprechend einem vollständigen Umsatz, erreicht wurde. Anschließend wurde das nicht umgesetzte, monomere HDI bei einer Temperatur von 140 °C und einem Druck von 0,1 mbar im Dünnschichtverdampfer abgetrennt. Es wurde ein praktisch farbloses, klares Isocyanatosilan mit folgenden Kenndaten erhalten: NCO-Gehalt: 9,8%; Viskosität (23 °C): 60 mPas.

### Beispiel 2: Isocyanatosilan 2

2220 g (10 mol) Isophorondiisocyanat (IPDI) wurden bei einer Temperatur von 80 °C unter trockenem Stickstoff mit 196 g (1,0 mol) Mercaptopropyltrimethoxysilan versetzt und nach Zugabe von 0,06 g (25 ppm) Dibutylzinndilaurat (DBTL) 3 Stunden gerührt, bis ein NCO-Gehalt von 33,0%, entsprechend einem vollständigen Umsatz, erreicht war. Anschließend wurde das nicht umgesetzte monomere IPDI bei einer Temperatur von 150 °C und einem Druck von 0,1 mbar im Dünnschichtverdampfer abgetrennt. Man erhielt ein praktisch farbloses, klares Isocyanatosilan mit folgenden Kenndaten: NCO-Gehalt = 9,7%; Festkörperanteil = 100%; Viskosität (23 °C) = 5.400 mPas.

### Beispiel 3: Herstellung STP-1

Zu 765 g des in Beispiel 1 hergestellten Isocyanatosilans und 8,9 g (0,06 mol) Tetraethylorthoformiat (TEOF) wurden bei 80 °C unter trockenem Stickstoff mit 128 g (0,9 mol) 2-Ethyl-1,3-hexandiol und 0,02 g (0,03 mmol) Dibutylzinn(IV) dilaurat (DBTL) hinzugegeben und die Reaktion so lange gerührt, bis ein Rest-NCO von 0,3% erreicht wurde. Das Rohprodukt wurde mit 100 g Butylacetat (BuAc) versetzt. Es wurde ein praktisch farbloses, klares STP-1 mit einem zahlenmittleren Molekulargewicht Mn von 942 g/mol und folgenden Kenndaten erhalten: NCO-Restgehalt: 0,3%; Viskosität (23 °C) 280 mPas; Festkörper: 80%.

### Beispiel 4: Herstellung von STP-2

506 g des nach Beispiel 1 hergestellten Isocyanatosilans, 15 g (0,1 mol) TEOF und 10 Tropfen DBTL wurden in einem Reaktor vorgelegt und auf 80 °C erhitzt. Dann wurde eine Mischung aus 728 g Polyol A1 und 36,9 (0,1 mol) g Stabaxol I hinzugegeben. Das Reaktionsgemisch wurde 5 h bei 80 °C gerührt. Das Produkt wurde abschließend mit 214 g BuAc versetzt und ohne weitere Aufreinigung eingesetzt. Es wurde ein praktisch farbloses, klares STP-3 mit einem zahlenmittleren Molekulargewicht Mn von 1740 g/mol und folgenden Kenndaten erhalten: NCO-Restgehalt: < 0,24%; Viskosität (23 °C): 490 mPas; Festkörper: 70%.

### Beispiel 5: Herstellung von STP-3

540,1 g Beispiel 2, 4,59 g Tetraethylorthoformiat (TEOF) und ein Tropfen DBTL werden bei 80 °C unter trockenem Stickstoff mit 89,2 g 2-Ethyl-1,3-hexandiol versetzt. Nach 5 h wird nochmals ein Tropfen DBTL hinzugegeben und die Reaktion so lange gerührt, bis ein Rest-NCO von < 0,3% erreicht wird. Das Rohprodukt wird mit 127,0 g Butylacetat (BuAc) versetzt. Es wird ein praktisch farbloses Silan mit folgenden Kenndaten erhalten: NCO-Restgehalt = < 0,3%; Viskosität (23 °C) = 9000 mPas; Festkörper = 80%;

### Basislackformulierung

Um die Migration von silanterminierten Prepolymeren in den Basislack nachzuweisen, wurde ein wässriger Basislack, schwarz, auf Basis eines Sekundäracrylates (OH-haltig) hergestellt. Hierzu wurden die Komponenten nacheinander eingewogen, vermischt und, wie in der Rezeptur angegeben, mit einem Dissolver mit Dispergierscheibe dispergiert.

| **Basislack 1** | | | Menge (g) |
|---|---|---|---|
| I.) | Bayhydrol A 2542, Lff. | | 34,81 |
| | Dest. Wasser | | 25,25 |
| | Dimethylethanolamin, 10%ig in dest. Wasser (für pH 8-8,5) | | 6,02 |
| | 2-Ethyl-1-hexanol | | 2,79 |
| | BYK 347, Lff. | | 0,17 |
| | BYK 345, Lff. | | 0,17 |
| | BYK 011, Lff. | | 1,45 |
| | Byketol AQ, Lff. | | 2,76 |
| | Solus 3050, 20% ig in Butylglykol / dest. Wasser / DMEA (50,00 / 28,58 / 1,42) | | 2,61 |
| | Rheovis AS 1130, Lff. | | 1,75 |
| | n-Butanol | | 0,14 |
| | - 5 min. bei ca. 10,5 m/s dispergieren - | | |
| II.) | Pigment-Paste, schwarz, bestehend aus: | | 6,20 |
| | Setaqua B E 270, Lff. | 10,40 | |
| | dest. Wasser | 41,60 | |
| | Borchi Gen 0851, Lff. | 32,00 | |
| | Colour Black FW 200 | 16,00 | |
| | - 30 min. bei ca. 10,5 m/s dispergieren - | | |
| III.) Dest. Wasser | | | 15,88 |
| **Gesamteinwaage** | | | **100,00** |

Es ergibt sich ein Festkörpergehalt bei Spritzviskosität von 21,7%, eine Auslaufzeit im DIN-Becher, (4mm) von 30s und ein pH-Wert von ca. 8,3.

### Decklackformulierungen

Die Zugabemenge des Verlaufsmittels wurde auf den Festharzanteil berechnet. Die Katalysatormenge wurde auf den Festharzanteil berechnet. Die Herstellung der Decklacke erfolgte indem die Bindemittel vorgelegt und unter Rühren erst das Lösemittel und anschließend in vorgegebener Reihenfolge die Additive bei Raumtemperatur untergerührt wurden. Als Lösemittel wurde Butylacetat verwendet. Die Lösungsmittelmengen wurden so gewählt, dass die Festkörper gleich waren. Die Decklacke wurden unmittelbar vor der Applikation frisch hergestellt.

| | Klarlack 1 | Klarlack 2 | Klarlack 3 |
|---|---|---|---|
| STP-1 | 100,00 | | |
| Vestanat EP-M 95 | | 100,00 | |
| STP-2 | | | 100,00 |
| Butylacetat (BA) | 48,63 | 74,86 | 22,40 |
| BYK 331, 10%ig in BA | 0,85 | 1,00 | 0,70 |
| Nacure 4000, 10%ig in BA | 6,38 | 7,50 | 5,25 |
| **Gesamteinwaage** | 155,86 | 183,36 | 128,35 |
| Festkörpergehalt (theo.), Gew.% | 55,0 | 55,0 | 55,0 |
| Katalysator, fest auf Festharz | 0,75 | 0,75 | 0,75 |

### Migrationsversuche

Für die Migrationsversuche wurde der Basislack mittels 50 µm-Spiralraktel auf einer Polypropylen(PP)-Platte aufgezogen, 5 Minuten bei Raumtemperatur abgelüftet und dann 20 Min. bei 80 °C in einem Umluft-Lacktrockenschrank getrocknet. Unmittelbar nach dem Abkühlen (20 Min RT) wurde dann der zu prüfende Klarlack mittels Spiralrakel (Formulierung 1 = 100 µm, Formulierung 4 = 150 µm, Formulierung 6 = 110 µm) auf den Basislack aufgebracht, 5 Minuten bei Raumtemperatur abgelüftet und dann 30 Min bei 100 °C in einem Umluft-Lacktrockenschrank eingebrannt. Die Schichtdicken des Basislackes (ca. 12 µm Trockenfilm) sind in allen Versuchsaufbauten identisch. Anschließend wurden die Platten 24 Stunden bei Normklima gelagert, der Lackaufbau von der PP-Platte abgezogen und anschließend der Basislack auf der Unterseite mittels eines FT-IR Spektrometers (Tensor II mit Platinum-ATR-Einheit (Diamantkristall) der Fa. Bruker) vermessen. Es wurden Einfachmessungen durchgeführt. Die Spektren wurden ausgewertet, indem eine Min.-Max-Normierung im Bereich 3900-3800 cm-1 vorgenommen wurde; es wurde keine Grundlinienkorrektur vorgenommen.

Die im Folgenden angeführten Signale wurden als charakteristische Banden für die Silanterminierten Prepolymere sowie für den Basislack ausgewertet. Diese Signale werden herangezogen, um die Diffusion des STPs-Decklacks in den Basislack zu beschreiben:

| | |
|---|---|
| 3323/3304 cm⁻¹ | Signalhöhe |
| 1685/1651 cm⁻¹ | Signalhöhe |
| 1590-1485 cm⁻¹ | Integration über Absorptionsbereich |

### Auswertung der Migrationsversuche

Die FT-IR-Spektren des wasserbasierten Basislacks, des STP-Klarlacks und des auf diesen beiden Komponenten beruhenden Mehrschichtenaufbaus wurden verglichen. Überraschenderweise wurde dabei beobachtet, dass eine Migration des STP-Decklacks in den Basislack stattfindet. Dies wurde anhand der IR-Spektrenauswertung gefunden und durch verschiedene Versuche belegt. Zusätzlich wurde mittels energiedispersiver Röntgenspektroskopie (REM/EDX) die Diffusion quantitativ charakterisiert (siehe Abschnittsende). Dazu wurden zum einen die Signalhöhen der Absorptionsmaxima des STP-Klarlacks mit den korrespondierenden Absorptionsintensitäten des wasserbasierenden Basislacks verglichen. Zum anderen wurde über einen Absorbtionsbereich des Mehrschichtenaufbaus - Basislack + STP-Klarlack- integriert und die erhaltene Fläche mit der eines wässrigen Basislack ohne Klarlackschicht verglichen.

In der nachfolgenden Tabelle werden die Absorptionsmaxima für verschiedene Beschichtungen und Beschichtungssysteme dargestellt. Beispielhaft soll hier die Migration des STP-Klarlacks in den Basislack anhand von STP-1 beschrieben werden. Um die Migration detektieren zu können, wurde ein Absorptionsmaximum des Klarlack 1 (STP 1) herausgegriffen, das ein intensives Absorptionsband im Vergleich zum Basislack mit der korrespondierenden Wellenzahl aufweist; für Klarlack 1 (STP 1) wurde 3304 cm⁻¹ gewählt.

| Nr. | System | Absorptionsmaximum bei **3304 cm⁻¹** (a.u.) | Absorptionsmaximum bei **3323 cm⁻¹** (a.u) | Differenz zum Basislack (a.u.) | Prozent (Verhältnis: Klarlack X/ Basislack 1) |
|---|---|---|---|---|---|
| 1 | Basislack 1 | 46,4 | 48,2 | . | |
| 2 | Klarlack 1^{[1]} (Decklack) | 217,5 | - | . | |
| 3 | Klarlack 1^{[I]} + Basislack 1 | 110,0 | - | 64 | 237% |
| 4 | Klarlack 2^{[2]} (Decklack) | - | 259,6 | - | - |
| 5 | Klarlack 2^{[2]} + Basislack 1 | - | 201,6 | 153 | 418% |
| 6 | Klarlack 3^{[3]} (Decklack) | - | 178,8 | - | - |
| 7 | Klarlack 3^{[3]} + Basislack 1 | - | 49,0 | 1 | 102% |

| | | | | | |
|---|---|---|---|---|---|
| [1] STP 1; [2] Vestanat EP-M 95; [3] STP-2. | | | | | |

Die Absorptionsmaxima (FT-IR) eines wasserbasierten Basislacks, eines STP-Decklacks und eines Mehrschichtaufbaus bestehend aus Basislack und STP-Decklacks wurden im Bereich zwischen 3304 cm⁻¹ und 3323 cm⁻¹ untersucht. Zur Auswertung wurde zunächst die Intensität (a.u.) der IR-Absorptionsbande von STP 1 (Nr. 2) und des Basislacks (Nr.1) bei 3304 cm⁻¹ bestimmt. Anschließend wurde ein IR-Spektrum des Mehrschichtenaufbaus (Nr. 3) -Basislack mit STP 1-aufgenommen. In diesen IR-Untersuchungen wurde gefunden, dass sich charakteristische Banden des STPs im rückseitigen IR-Spektrum des Basislacks wiederfinden. Dies soll am Beispiel von Klarlack 1 auf Basis von STP-1 diskutiert werden: für den Basislack, hier als Basislack 1 (Nr.1) bezeichnet, wurde bei einer Wellenzahl von 3304 cm⁻¹ ein Signal mit einer Intensität von 46,4 a.u. gemessen. Der Mehrschichtenaufbau (Nr. 3) hingegen zeigte ein deutlich intensiveres Signal mit 110,0 a.u.; dies entspricht einem Intensitätsunterschied von 237%. Diese intensive Absorptionsbande wurde zuvor mit einer stärkeren Intensität für den reinen Klarlack 1 (Nr.2) gefunden. Anhand dessen wird die Diffusion des Klarlacks 1 in den Basislack nachgewiesen.

Die nachfolgende Tabelle zeigt die Absorptionsmaxima (FT-IR) eines wasserbasierten Basislacks, eines STP-Decklacks und eines Mehrschichtaufbaus bestehend aus Basislack und STP im Bereich zwischen 1651 cm⁻¹ und 1685 cm⁻¹.

| Nr. | System | Absorptionsmaximum bei **1651 cm⁻¹** (a.u.) | Absorptionsmaximum bei **1685 cm⁻¹** (a.u) | Differenz zum Basislack (a.u.) | Prozent |
|---|---|---|---|---|---|
| 1 | Basislack 1 | 75,9 | 167,0 | - | - |
| 2 | Klarlack 1^{[1]} (Decklack) | 600,5 | - | - | - |
| 3 | Klarlack 1^{[1]} + Basislack 1 | 376,2 | - | 300 | 496% |
| 4 | Klarlack 2^{[2]} (Decklack) | - | 911,2 | - | |
| 5 | Klarlack 2^{[2]} + Basislack 1 | - | 821,6 | 655 | 492% |
| 6 | Klarlack 3^{[3]} (Decklack) | 610,8 | - | - | |
| 7 | Klarlack 3^{[3]} + Basislack | 158,0 | - | 82 | 208% |

| | | | | | |
|---|---|---|---|---|---|
| [1] STP 1; [2] Vestanat EP-M 95; [3] STP-2. | | | | | |

Aus der Tabelle wird ersichtlich, dass analoge Ergebnisse für die Absorptionsmaxima der Klarlacke bei 1651 cm⁻¹ und 1685 cm⁻¹ erhalten wurden. Die Ergebnisse werden exemplarisch am Beispiel des STP 2 diskutiert. Bei 1651 cm⁻¹ wurde für den Basislack (Nr.1) eine Intensität von 75,9 a.u. beobachtet. Für den Klarlack 3 (Nr. 6) wurde eine Intensität von 610,8 a.u. gefunden. Im Mehrschichtenaufbau (Nr.7) - Basislack und Klarlack 3 - wurde eine Intensität von 158,0 (a.u.) gemessen. Letzteres entspricht einer Steigerung des Basislacksignals (Nr.1) um 208%. Die erhöhte Signalintensität bei einer Wellenzahl von 1651 cm⁻¹ wird auf Klarlack 3 zurückgeführt, denn dieser weist bei angeführten Wellenzahl eine sehr starke Absorptionsbande auf, die sich hier teilweise im Klarlack 1-Basislack-Aufbau widerspiegelt Diese Ergebnisse belegen, dass eine Diffusion des Klarlacks 3 in den Basislack stattfindet.

Neben der Signalhöhe, d.h. der Intensität, kann auch die Fläche unterhalb der Absorptionsbanden zu Charakterisierung der Diffusion der STP-Klarlacke durch eine Basislackschicht herangezogen werden. Eine solche wird beispielhaft am Beispiel des STP Vestanat EP-M 95 (Tabelle siehe unten) diskutiert. Es handelt es sich um ein chemisch modifiziertes STP, das nur über eine Urethangruppe und keine ergänzende Thiourethangruppe verfügt. Im Absorptionsbereich von 1590 cm⁻¹ bis 1485 cm⁻¹ (s.o.) wurde die Fläche unterhalb der Absorptionsbande des Basislacks 1 (Nr.1) zu 8394 (a.u.) bestimmt. Die Fläche des STPs (Nr. 6) beträgt 39908 (a.u.). Für den Mehrschichtenaufbau (Nr. 7) ergibt sich eine Fläche von 33013 (a.u.). Dies entspricht einer Steigerung von 393%. Dieser Wert liegt nahe an dem Wert für die integrale Fläche des STP-Klarlacks (Nr.6).

| Nr. | Absorptionsbereich (1590-1485 cm⁻¹) | Integrierte Fläche im Absorptionsbereich (a.u.) | Differenz zum Basislack | %tuale Differenz |
|---|---|---|---|---|
| 1 | Basislack 1 | 8394 | - | - |
| 2 | STP 1 (Klarlack) | 33745 | - | - |
| 3 | STP 1 + Basislack 1 | 20890 | 12496 | 248% |
| 4 | STP 2 (Klarlack) | 33561 | - | |
| 5 | STP 2 + Basislack 1 | 9603 | 1209 | 114% |
| 6 | Vestanat EP-M 95 (Klarlack) | 39908 | - | - |
| 7 | Vestanat EP-M 95 + Basislack 1 | 33013 | 24619 | 393% |

Diese Versuche zeigen, dass unabhängig von der Struktur und dem Molekulargewicht des STPs eine Diffusion durch den Basislack stattfindet. Dafür wurde sowohl die Signalintensität als auch die Fläche des Signals verwendet. Diese Diffusion kann man sehr gut mit den mechanischen Eigenschaften der Schichtverbünde korrelieren. Ohne durch die Theorie gebunden zu sein, ergeben sich bevorzugte mechanische Eigenschaften und insbesondere eine besonders gute Haftung des Schichtverbundes durch die Diffusion des STPs in den Basislack.

Messungen mittels energiedispersiver Röntgenspektroskopie (REM/EDX) bestätigten die überraschenden Befunde mit Phosphor-haltigen Katalysatoren. Mit Hilfe dieser Methode kann zudem das Maß der Diffusion mit Hilfe der charakteristischen Elemente aus den Beschichtungsmaterialien bestimmt werden. Dabei werden die Beschichtungen nicht nur mit den überraschend geeigneten Phosphor-haltigen Säurekatalysatoren untersucht, sondern auch mit Schwefel-haltigen Säurekatalysatorsystemen verglichen. Letztere zeigen ebenso eine Diffusion in den Klarlack, was für den Fachmann aus bekannten technischen Gründen erwünscht ist.

In den folgenden Beispielen wird eine physikalische Mischung verschiedener STPs verwendet, um die Diffusion des Klarlacks in den Basislack zu beschreiben. Die Messungen zeigen, dass eine Diffusion des Klarlacks in den Basislack von mindestens 5 µm erfolgt. Dieser überraschende Befund zeigt, dass die STP-Beschichtung in Kombination mit den genannten Katalysatorsystemen die Haftung zwischen den Schichten und die Vernetzung des Basislacks fördert.

| Komponente | Klarlack 4 (g) | Klarlack 5 (g) |
|---|---|---|
| STP-1 | 56,00 | 56,00 |
| STP-2 | 21,00 | 21,00 |
| STP-3 | 8,00 | 8,00 |
| Dibutylphosphat/Diphenylphosphat (10% in BA) | 0,99 / 3,30 | - |
| H₂SO₄ (10% in MeOH) | - | 3,30 |
| BYK 315N (10% in MPA) | 1,98 | 1,98 |
| MPA | (41,53) | (41,53) |

Für den Schwefel- und Siliziumgehalt, die jeweils aus der Klarlackschicht herrühren, wurden in der EDX-Messungen 7,5% bzw. 6% gefunden. Von der Grenzschicht ausgehend bis 15 µm innerhalb des Basislacks hinein, wird eine Abnahme des Schwefelgehalts von 6,5% bis auf 1,5% gefunden; für Silizium wird eine Abnahme von 4,5% bis 1,0% gefunden (Klarlack 4).

| Nr. | Lacksystem | Klarlack 4 | Klarlack 5 |
|---|---|---|---|
| | Schwefelgehalt (Klarlack) | 7,5% | 7,0% |
| | Schwefelgehalt (Basislack, schwarz) (0 µm* / 5 µm / 10 µm / 15 µm) | 6,5% / 4,0% / 2,5% / 1,5% | 6,0% / 2,0% / 0% / 0% |
| | Siliziumgehalt (Klarlack) | 6% | 6% |
| | Siliziumgehalt (Basislack, schwarz) (0 µm* / 5 µm / 10 µm / 15 µm) | 4,5% / 3,0% / 2,0% /1,0% | 5,0% / 1,5% / 0% / 0% |
| | Kohlenstoffgehalt (Klarlack) | 65% | 64% |
| | Kohlenstoffgehalt (Basislack, schwarz) (0 µm* / 5 µm / 10 µm / 15 µm) | 70% / 74% / 77% / 79% | 66% / 75% / 78% / 78% |

| | | | |
|---|---|---|---|
| *Grenzfläche zwischen Klarlack und Basislack (schwarz) | | | |

Mit Schwefel-haltigen Katalysatoren wie Schwefelsäure wird für die STP-Beschichtung (Klarlack 5) eine geringere Diffusion beobachtet, deren Diffusionsgrenze wird oberhalb von 6 µm erreicht.

## Patentansprüche

1. Schichtverbund aus einer unteren Basislack- und einer darüber angeordneten Decklackschicht auf einem Substrat,
**dadurch gekennzeichnet, dass**
der Basislack zu größer oder gleich 50 Gew.-% und kleiner 100 Gew.-% Polymere ausgesucht aus der Gruppe bestehend aus Polyacrylaten, Polyurethanen, Polyetherpolyolen, Polycarbonatpolyolen, Polyesterpolyolen, Melaminharzen, Alkydharzen oder Mischungen daraus;
die Decklackschicht zu größer oder gleich 40 Gew.-% und kleiner oder gleich 100 Gew.-% silangruppen-enthaltende Prepolymere und/oder deren Vernetzungsprodukte; und
der Basislack zu größer oder gleich 0,5 Gew.-% und kleiner oder gleich 15 Gew.-% silangruppen-enthaltende Prepolymere und/oder deren Vernetzungsprodukte
enthält und wobei die silangruppen-enthaltenden Prepolymere und/oder deren Vernetzungsprodukte mindestens eine Thiourethan- und/oder Urethaneinheit im Molekül aufweisen,
wobei sich die Gewichts-%-Angaben jeweils auf den getrockneten und gehärteten Basislack, bzw. die getrocknete und gehärtete Decklackschicht beziehen.

2. Schichtverbund nach Anspruch 1, wobei die silangruppen-enthaltenden Prepolymere oder ihre Vernetzungsprodukte ausgesucht sind aus der Gruppe bestehend aus Polyurethanen, polymeren Polyisocyanaten, Umsetzungsprodukte polymerer Polyole mit Silan-haltigen Verbindungen, Polyetherpolyolen, Polyesterpolyolen, Polycarbonatpolyolen, Polyacrylatpolyolen, Polymethacrylatpolyolen, Polyharnstoff, Polyurethanpolyole oder Mischungen daraus, wobei die einzelnen Prepolymere dieser Gruppendefinition jeweils mindestens eine Alkoxysilangruppe tragen.

3. Schichtverbund nach einem der vorhergehenden Ansprüche, wobei die silangruppen-enthaltenden Prepolymere und/oder deren Vernetzungsprodukte ausgesucht sind aus der Gruppe bestehend aus niedermolekulare Alkohole, Polyacrylatpolyole, Polyesterpolyole, Polysiloxanpolyole oder Mischungen daraus.

4. Schichtverbund nach einem der vorhergehenden Ansprüche, wobei die Decklackschicht Katalysatoren ausgewählt aus der Gruppe bestehend aus Phosphorsäure, Dibutylphosphat, Bis(ethylhexylphosphat), Diphenylphosphat, Dimethylphosphat, Methylphosphat, Trimethylphosphat, Phenylphosphonsäure, Phenylphosphinsäure oder Mischungen daraus in einer Konzentration von größer oder gleich 0,25 Gew.-% und kleiner oder gleich 2,5 Gew.-%, bevorzugt größer oder gleich 0,25 Gew.-% und kleiner oder gleich 2 Gew.-%, bezogen auf die Decklackschicht umfasst.

5. Schichtverbund nach einem der vorhergehenden Ansprüche, wobei die obere Decklackschicht bei einer Schichtdicke von 50 µm auf einem weißen Basislack einen Delta-Lab-Wert in Bezug zu weißem Basislack von ΔL größer oder gleich 0,2 und kleiner oder gleich 20, von Δa größer oder gleich -0,01 und kleiner oder gleich -20, und Δb größer oder gleich -0,01 und kleiner oder gleich -13 aufweist, der entsprechend DIN EN ISO 1166-4:2012-06 bestimmt wurde.

6. Schichtverbund nach einem der vorhergehenden Ansprüche, wobei der Schichtverbund eine Pendelhärte gemessen DIN EN ISO 1522:2000-09 von größer oder gleich 60 s und kleiner oder gleich 180 s aufweist.

7. Schichtverbund nach einem der vorhergehenden Ansprüche, wobei die Basislackschicht einen Anteil von größer oder gleich 1 Gew.-% und kleiner oder gleich 10 Gew.-% Silizium aufweist.

8. Verfahren zur Herstellung eines mindestens 2-schichtigen Lackaufbaus aus einer unteren Basislack- und einer darüber angeordneten oberen Decklackschicht auf einem Substrat, **dadurch gekennzeichnet, dass**
das Verfahren zumindest die folgenden Schritte aufweist:
a) Aufbringen einer Basislackschicht umfassend Polymere ausgesucht aus der Gruppe bestehend aus Polyacrylaten, Polyurethanen, Polyetherpolyolen, Polycarbonatpolyolen, Polyesterpolyolen, Melaminharzen, Alkydharzen oder deren Mischungen auf ein Substrat;
b) zumindest teilweises Aushärten der Basislackschicht;
c) Aufbringen eines Decklacks auf die in Schritt b) zumindest teilweise ausgehärtete Basislackschicht, wobei der Decklack als strukturgebende Komponente silangruppen-enthaltende Prepolymere und/oder deren Vernetzungsprodukte enthält, wobei die silangruppen-enthaltenden Prepolymere und/oder deren Vernetzungsprodukte mindestens eine Thiourethan- und/oder Urethaneinheit im Molekül aufweisen, und wobei der ausgehärtete Decklack einem Si-Gehalt von größer oder gleich 2,0 und kleiner oder gleich 9,0 Gew.-% und einen Katalysatorgehalt von größer oder gleich 0,01 Gew.-% und kleiner oder gleich 5 Gew.-% aufweist, und wobei der Katalysator ausgewählt ist aus der Gruppe bestehend aus Protonen- oder Lewissäuren oder Mischungen daraus; und
d) zumindest teilweises Aushärten der Decklackschicht.

9. Verfahren gemäß Anspruch 8, wobei der Basislack bei einer Temperatur von größer oder gleich 10 °C und kleiner oder gleich 80 °C zumindest teilweise getrocknet wird.

10. Verfahren gemäß einem der Ansprüche 8 - 9, wobei der Katalysator der Decklackschicht einen pKs-Wert von größer oder gleich -14,0 und kleiner oder gleich 6 aufweist.

11. Verfahren gemäß einem der Ansprüche 8 - 10, wobei die silangruppen-enthaltende Prepolymere ein zahlenmittleres Molekulargewicht gemessen nach DIN EN ISO 55672-1:2016-03 von größer oder gleich 250 g/mol und kleiner oder gleich 40000 g/mol aufweisen.

12. Verfahren gemäß einem der Ansprüche 8 - 11, wobei das zumindest teilweise Aushärten in Schritt d) in einem Temperaturbereich von größer oder gleich 10 °C und kleiner oder gleich 90 °C erfolgt.

13. Verwendung eines Schichtverbunds nach einem der Ansprüche 1 - 7 zum Verkleben, Abdichten oder Beschichten eines Substrats.

14. Fahrzeug oder Fahrzeugkarosserieteil aufweisend einen Schichtverbund nach einem der Ansprüche 1 - 7.

## Claims

1. Composite coating composed of a lower basecoat and arranged over it a topcoat on a substrate, **characterized in that**
the basecoat material comprises greater than or equal to 50 wt% and less than 100 wt% of polymers selected from the group consisting of polyacrylates, polyurethanes, polyether polyols, polycarbonate polyols, polyester polyols, melamine resins, alkyd resins, or mixtures thereof;
the topcoat comprises greater than or equal to 40 wt% and less than or equal to 100 wt% of silane group-containing prepolymers and/or crosslinking products thereof; and the basecoat material comprises greater than or equal to 0.5 wt% and less than or equal to 15 wt% of silane group-containing prepolymers and/or crosslinking products thereof;
and where the silane group-containing prepolymers and/or crosslinking products thereof have at least one thiourethane unit and/or urethane unit in the molecule, the weight% figures being based respectively on the dried and cured basecoat material and on the dried and cured topcoat.

2. Composite coating according to Claim 1, wherein the silane group-containing prepolymers or their crosslinking products are selected from the group consisting of polyurethanes, polymeric polyisocyanates, reaction products of polymeric polyols with silane-containing compounds, polyether polyols, polyester polyols, polycarbonate polyols, polyacrylate polyols, polymethacrylate polyols, polyurea, polyurethane polyols, or mixtures thereof, where the individual prepolymers of this group definition each carry at least one alkoxysilane group.

3. Composite coating according to either of the preceding claims, wherein the silane group-containing prepolymers and/or crosslinking products thereof are selected from the group consisting of low molecular alcohols, polyacrylate polyols, polyester polyols, polysiloxane polyols, or mixtures thereof.

4. Composite coating according to any of the preceding claims, wherein the topcoat comprises catalysts selected from the group consisting of phosphoric acid, dibutyl phosphate, bis(ethylhexyl phosphate), diphenyl phosphate, dimethyl phosphate, methyl phosphate, trimethyl phosphate, phenylphosphonic acid, phenylphosphinic acid, or mixtures thereof in a concentration of greater than or equal to 0.25 wt% and less than or equal to 2.5 wt%, preferably greater than or equal to 0.25 wt% and less than or equal to 2 wt%, based on the topcoat.

5. Composite coating according to any of the preceding claims, wherein the upper topcoat at a layer thickness of 50 µm on a white basecoat has a delta-Lab value in relation to white basecoat of ΔL greater than or equal to 0.2 and less than or equal to 20, of Δa greater than or equal to -0.01 and less than or equal to -20, and Δb greater than or equal to -0.01 and less than or equal to -13, determined in accordance with DIN EN ISO 1166-4:2012-06.

6. Composite coating according to any of the preceding claims, wherein the composite coating has a pendulum hardness, measured to DIN EN ISO 1522:2000-09, of greater than or equal to 60 s and less than or equal to 180 s.

7. Composite coating according to any of the preceding claims, wherein the basecoat has a silicon fraction of greater than or equal to 1 wt% and less than or equal to 10 wt%.

8. Method for producing an at least 2-coat paint system composed of a lower basecoat and arranged over it an upper topcoat on a substrate,
**characterized in that**
the method has at least the following steps:
a) applying a basecoat comprising polymers selected from the group consisting of polyacrylates, polyurethanes, polyether polyols, polycarbonate polyols, polyester polyols, melamine resins, alkyd resins, or mixtures thereof to a substrate;
b) at least partly curing the basecoat;
c) applying a topcoat material to the basecoat at least partly cured in step b), the topcoat material comprising, as structuring component, silane group-containing prepolymers and/or crosslinking products thereof, where the silane group-containing prepolymers and/or crosslinking products thereof have at least one thiourethane unit and/or urethane unit in the molecule, the cured topcoat material having an Si content of greater than or equal to 2.0 and less than or equal to 9.0 wt% and a catalyst content of greater than or equal to 0.01 wt% and less than or equal to 5 wt%, and the catalyst being selected from the group consisting of protic acids or Lewis acids, or mixtures thereof; and
d) at least partly curing the topcoat.

9. Method according to Claim 8, wherein the basecoat material is at least partly dried at a temperature of greater than or equal to 10°C and less than or equal to 80°C.

10. Method according to either of Claims 8 and 9, wherein the catalyst of the topcoat has a pKa of greater than or equal to -14.0 and less than or equal to 6.

11. Method according to any of Claims 8 - 10, wherein the silane group-containing prepolymers have a number-average molecular weight, measured according to DIN EN ISO 55672-1:2016-03, of greater than or equal to 250 g/mol and less than or equal to 40 000 g/mol.

12. Method according to any of Claims 8 - 11, wherein the at least partial curing in step d) takes place in a temperature range of greater than or equal to 10°C and less than or equal to 90°C.

13. Use of a composite coating according to any of Claims 1 - 7 for bonding, sealing or coating a substrate.

14. Vehicle or vehicle bodywork part having a composite coating according to any of Claims 1 - 7.

## Revendications

1. Composite stratifié constitué par une couche de laque de base inférieure et une couche de laque de recouvrement agencée sur celle-ci sur un substrat, **caractérisé en ce que**
la laque de base contient à raison de 50% en poids ou plus et de moins de 100% en poids de polymères choisis dans le groupe constitué par les polyacrylates, les polyuréthanes, les polyétherpolyols, les polycarbonatepolyols, les polyesterpolyols, les résines de mélamine, les résines alkyde ou leurs mélanges ;
la couche de laque de recouvrement contient à raison de 40% en poids ou plus et de 100% en poids ou moins de prépolymères contenant des groupes silane et/ou leurs produits de réticulation ; et
la laque de base contient à raison de 0,5% en poids ou plus et de 15% en poids ou moins de prépolymères contenant des groupes silane et/ou leurs produits de réticulation et les prépolymères contenant des groupes silane et/ou leurs produits de réticulation présentant au moins un motif thio-uréthane et/ou uréthane dans la molécule, les indications de % en poids se rapportant à chaque fois à la laque de base séchée et durcie ou, selon le cas, à la couche de laque de recouvrement séchée et durcie.

2. Composite stratifié selon la revendication 1, les prépolymères contenant des groupes silane ou leurs produits de réticulation étant choisis dans le groupe constitué par les polyuréthanes, les polyisocyanates polymères, les produits de transformation de polyols polymères avec des composés contenant silane, les polyétherpolyols, les polyesterpolyols, les polycarbonatepolyols, les polyacrylatepolyols, les polyméthacrylatepolyols, la polyurée, les polyuréthanepolyols ou leurs mélanges, les différents prépolymères de cette définition de groupe portant à chaque fois au moins un groupe alcoxysilane.

3. Composite stratifié selon l'une des revendications précédentes, les prépolymères contenant des groupes silane et/ou leurs produits de réticulation étant choisis dans le groupe constitué par les alcools de bas poids moléculaire, les polyacrylatepolyols, les polyesterpolyols, les polysiloxanepolyols ou leurs mélanges.

4. Composite stratifié selon l'une des revendications précédentes, la couche de laque de recouvrement comprenant des catalyseurs choisis dans le groupe constitué par l'acide phosphorique, le phosphate de dibutyle, le bis(phosphate d'éthylhexyle), le phosphate de diphényle, le phosphate de diméthyle, le phosphate de méthyle, le phosphate de triéthyle, l'acide phénylphosphonique, l'acide phénylphosphinique ou leurs mélanges en une concentration supérieure ou égale à 0,25% en poids et inférieure ou égale à 2,5% en poids, de préférence supérieure ou égale à 0,25% en poids et inférieure ou égale à 2% en poids, par rapport à la couche de laque de recouvrement.

5. Composite stratifié selon l'une des revendications précédentes, la couche de laque de recouvrement supérieure présentant, à une épaisseur de couche de 50 µm sur une laque de base blanche, une valeur Delta-Lab, par rapport à la laque de base blanche, ΔL supérieure ou égale à 0,2 et inférieure ou égale à 20, Δa supérieure ou égale à -0,01 et inférieure ou égale à -20 et Δb supérieure ou égale à -0,01 et inférieure ou égale à - 13, qui a été déterminée selon la norme DIN EN ISO 1166-4:2012-06.

6. Composite stratifié selon l'une des revendications précédentes, le composite stratifié présentant une dureté au pendule, mesurée selon la norme DIN EN ISO 1522:2000-09 supérieure ou égale à 60 s et inférieure ou égale à 180 s.

7. Composite stratifié selon l'une des revendications précédentes, la couche de laque de base présentant une proportion de silicium supérieure ou égale à 1% en poids et inférieure ou égale à 10% en poids.

8. Procédé de préparation d'une structure de laque au moins à 2 couches, constituée par une couche de laque de base inférieure et une couche de laque de recouvrement supérieure agencée sur celle-ci sur un substrat, **caractérisé en ce que**
le procédé présente au moins les étapes suivantes :
a) application d'une couche de laque de base, comprenant des polymères choisis dans le groupe constitué par les polyacrylates, les polyuréthanes, les polyétherpolyols, les polycarbonatepolyols, les polyesterpolyols, les résines de mélamine, les résines alkyde ou leurs mélanges sur un substrat ;
b) durcissement au moins partiel de la couche de laque de base ;
c) application d'une laque de recouvrement sur la couche de laque de base au moins partiellement durcie dans l'étape b), la laque de recouvrement contenant en tant que composant structurant des prépolymères contenant des groupes silane et/ou leurs produits de réticulation, les prépolymères contenant des groupes silane et/ou leurs produits de réticulation présentant au moins un motif thio-uréthane et/ou uréthane dans la molécule et la laque de recouvrement durcie présentant une teneur en Si supérieure ou égale à 2,0% en poids et inférieure ou égale à 9,0% en poids et une teneur en catalyseur supérieure ou égale à 0,01% en poids et inférieure ou égale à 5% en poids et le catalyseur étant choisi dans le groupe constitué par les acides protoniques ou de Lewis ou leurs mélanges ; et
d) durcissement au moins partiel de la couche de laque de recouvrement.

9. Procédé selon la revendication 8, la laque de base étant séchée au moins partiellement à une température supérieure ou égale à 10°C et inférieure ou égale à 80°C.

10. Procédé selon l'une des revendications 8 à 9, le catalyseur de la couche de laque de base présentant une valeur pKa supérieure ou égale à -14,0 et inférieure ou égale à 6.

11. Procédé selon l'une des revendications 8 à 10, les prépolymères contenant des groupes silane présentant un poids moléculaire moyen en nombre, mesuré selon la norme DIN EN ISO 55672-1:2016-03, supérieure ou égale à 250 g/mole et inférieure ou égale à 40.000 g/mole.

12. Procédé selon l'une des revendications 8 à 11, le durcissement au moins partiel dans l'étape d) ayant lieu dans une plage de température supérieure ou égale à 10°C et inférieure ou égale à 90°C.

13. Utilisation d'un composite stratifié selon l'une des revendications 1 à 7 pour le collage, l'étanchéification ou le revêtement d'un substrat.

14. Véhicule ou partie de carrosserie de véhicule présentant un composite stratifié selon l'une des revendications 1 à 7.
